# EUROPEAN PATENT APPLICATION

(11) **EP 4 618 672 A1**
(43) Date of publication of application: **17.09.2025**
(21) Application number: 23887929.0
(22) Date of filing: 04.11.2023
(51) Int. Cl.: H04W 72/12

(54) **METHOD AND APPARATUS USED IN COMMUNICATION NODE FOR WIRELESS COMMUNICATION**

(30) Priority: 11.11.2022 CN 202211415022
(71) Applicant: Apogee Networks, LLC, Dallas, TX 75201 (US)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/129820
(87) International publication number: WO 2024/099239

(57) **Abstract**

Disclosed in the present application are a method and apparatus used in a communication node for wireless communication. A communication node sends first signaling, wherein the first signaling is used for determining a first delay budget and the first delay budget depends on at least a first system frame, or the first signaling indicates a first moment and the first moment is a cut-off moment of a first delay budget; the first delay budget is a delay budget of a first data packet set; the first data packet set comprises at least one data packet, and each data packet in the first data packet set is a data packet on a MAC sub-layer; and a first system frame number is used for indicating the first system frame, and the first system frame number is an integer. With regard to delay budget reporting, the present application provides the solution of reporting a delay budget on the basis of a system frame or reporting a cut-off moment of a delay budget, and the solution can improve the resource scheduling performance and the QoS performance.

## Description

### Technical Field

The present application relates to a transmission method and apparatus in a wireless communication system, in particular to a method and apparatus for large data volume especially high-speed and low-delay services.

### Background Art

Application scenarios of a wireless communication system in the future will become more and more diversified, and different application scenarios will put forward different performance requirements for the system. In order to meet different performance requirements of various application scenarios, at the 3GPP (3rd Generation Partner Project) RAN (Radio Access Network) #72 plenary meeting, it was decided to research a new radio (NR) technology. At the 3GPP RAN #75 plenary meeting, the WI (Work Item) of NR (New Radio) was passed to begin the standardization work on NR (New Radio). Therein, XR is one important research direction of R18 (Release 18).

### Summary of the Invention

In existing protocols, a buffer status reporting (BSR) process is used for providing data volume information, and the data volume information carried by one BSR MAC (Medium Access Control) CE (Control Element) is used for resource allocation. The existing buffer status reporting mechanism cannot meet the requirements of XR services for the following considerations: the XR services comprise a VR (Virtual Reality) service, an AR (Augmented Reality) service, and an MR (Mixed Reality) service, which have the features of high speed and low latency; meanwhile, the XR services are interactive services and have strict requirements on the response time of services; and a plurality of data packets of the XR services have a certain dependency relationship and need to meet the requirements of the PDU-set delay budget (PSDB). In addition to reporting a buffered data volume, the user equipment (UE) reports a PDU-set delay budget, which is an effective solution to improve resource scheduling of a base station. Researchers found that when UE reports a remaining PDU-set delay budget value, a remaining PDU-set delay budget will change due to factors such as processing delay, radio delay, and retransmission; when the base station receives the remaining PDU-set delay budget value reported by the UE, the actual remaining PDU-set delay budget is deviated from that during UE reporting, which affects the timeliness and QoS (Quality of Service) performance of the base station for resource scheduling, leading to the problems that, for example, the UE discards data packets before the base station schedules an uplink resource, or the UE has discarded data packets but the base station still schedules the uplink resource. Therefore, how the UE reports the PDU-set delay budget needs to be enhanced.

In view of the above-mentioned problems, the present application provides a solution for reporting a PDU-set delay budget. In view of the description of the above-mentioned problems, an XR service is used as an example; the present application is also applicable to scenarios, for example, other high data rate services; and further, although the present application provides an implementation for NR, the present application can also be used for scenarios, for example, a LTE (Long-Term Evolution) scenario, so as to achieve similar technical effects to the NR. Further, although the original intention of the present application is directed at a Uu radio, the present application can also be used for a PC5 port. Further, although the original intention of the present application is directed at a terminal and base station scenario, the present application is also applicable to a V2X (Vehicle-to-Everything) scenario and communication scenarios between the terminal and a relay and between the relay and the base station, to achieve similar technical effects in the terminal and base station scenario. Further, although the original intention of the present application is directed at the terminal and base station scenario, the present application is also applicable to an IAB (Integrated Access and Backhaul) communication scenario, to achieve similar technical effects in the terminal and base station scenario. Further, although the original intention of the present application is directed at a terrestrial network scenario, the present application is also applicable to a non-terrestrial network (NTN) communication scenario, to achieve similar technical effects in the TN scenario. In addition, the use of a unified solution for different scenarios also facilitates the reduction of hardware complexity and costs.

As one embodiment, the interpretation of the terminologies in the present application refers to the definition of the 3GPP specification protocol TS36 series.

As one embodiment, the interpretation of the terminologies in the present application refers to the definition of the 3GPP standard protocol TS38 series.

As one embodiment, the interpretation of the terminologies in the present application refers to the definition of the 3GPP standard protocol TS37 series.

As one embodiment, the interpretation of the terminologies in the present application refers to the definition of the standard protocol of the IEEE (Institute of Electrical and Electronics Engineers).

It should be explained that in the absence of conflicts, the embodiments in any node of the present application and the features in the embodiments can be applied to any other node. In the absence of conflicts, the embodiments of the present application and the features in the embodiments can be arbitrarily combined with each other.

The present application discloses a method used in a first node for wireless communication, comprising:
sending first signaling, the first signaling being used for determining a first delay budget and the first delay budget depending on at least a first system frame; or
sending first signaling, the first signaling indicating a first moment and the first moment being a cut-off moment of a first delay budget,
wherein the first delay budget is a delay budget of a first data packet set; the first data packet set comprises at least one data packet, and each data packet in the first data packet set is a data packet on a MAC sub-layer; and a first system frame number is used for indicating the first system frame, and the first system frame number is an integer.

As one embodiment, the problem to be solved by the present application comprises: how to avoid delay budget deviation caused by factors such as processing delay, radio delay, and retransmission, etc.

As one embodiment, the problem to be solved by the present application comprises: how to determine a first delay budget.

As one embodiment, the problem to be solved by the present application comprises: how to report a first delay budget.

As one embodiment, the characteristics of the above-mentioned method comprise: the first delay budget depends on at least a first system frame.

As one embodiment, the characteristics of the above-mentioned method comprise: the first signaling indicates a first moment, and the first moment is a cut-off moment of a first delay budget.

As one embodiment, the benefits of the above-mentioned method comprise: avoiding delay budget deviation caused by factors such as processing delay, radio delay, and retransmission, etc.

As one embodiment, the benefits of the above-mentioned method comprise: improving the accuracy of a reported delay budget.

As one embodiment, the benefits of the above-mentioned method comprise: improving resource scheduling performance.

According to one aspect of the present application, it is characterized by comprising:
receiving a first message, the first message indicating a delay budget of the data packet of a first radio bearer,
wherein the first data packet set belongs to the first radio bearer; and receiving time of the first data packet set and the delay budget of the data packet of the first radio bearer are jointly used for determining the first moment.

According to one aspect of the present application, it is characterized in that the first signaling indicates the first moment, and the first moment depends on at least the first system frame.

According to one aspect of the present application, it is characterized in that the first signaling comprises a first index, the first index corresponds to a first time interval, and the first time interval comprises the first moment; and the first signaling indicates the first moment.

According to one aspect of the present application, it is characterized in that a first table is used for determining the first index; the first table comprises Q1 indexes and at most Q1 time intervals, the Q1 is a positive integer, and the Q1 is greater than 1; each time interval of the at most Q1 time intervals corresponds to one index of the Q1 indexes, and indexes corresponding to any two time intervals of the at most Q1 time intervals are different; and the first index is one index of the Q1 indexes, and the first time interval is one time interval of the Q1 time intervals.

According to one aspect of the present application, it is characterized in that the first signaling indicates a first time length, and the second moment and the first time length are used for determining the first delay budget; and at least one of the second moment or the first time length depends on the first system frame.

According to one aspect of the present application, it is characterized in that the first signaling indicates the second moment.

According to one aspect of the present application, it is characterized in that the first signaling comprises a first index, the first index corresponds to a first time interval, and the first time interval comprises the first time length; and the first delay budget depends on at least the first system frame.

According to one aspect of the present application, it is characterized in that a first table is used for determining the first index; the first table comprises Q1 indexes and at most Q1 time intervals, the Q1 is a positive integer, and the Q1 is greater than 1; each time interval of the at most Q1 time intervals corresponds to one index of the Q1 indexes, and indexes corresponding to any two time intervals of the at most Q1 time intervals are different; and the first index is one index of the Q1 indexes, and the first time interval is one time interval of the Q1 time intervals.

According to one aspect of the present application, it is characterized in that a cut-off moment of the first delay budget is used for determining to discard the first data packet set.

According to one aspect of the present application, it is characterized in that the first signaling indicates first data information, and the first data information comprises a data volume of at least one data packet in the first data packet set.

According to one aspect of the present application, it is characterized by comprising:
receiving target signaling, the target signaling being used for determining a first uplink grant,
wherein the first signaling triggers the target signaling.

The present application discloses a method used in a second node for wireless communication, comprising:
receiving first signaling, the first signaling being used for determining a first delay budget and the first delay budget depending on at least a first system frame; or
receiving first signaling, the first signaling indicating a first moment and the first moment being a cut-off moment of a first delay budget,
wherein the first delay budget is a delay budget of a first data packet set; the first data packet set comprises at least one data packet, and each data packet in the first data packet set is a data packet on a MAC sub-layer; and a first system frame number is used for indicating the first system frame, and the first system frame number is an integer.

According to one aspect of the present application, it is characterized by comprising:
sending a first message, the first message indicating a delay budget of a data packet of a first radio bearer,
wherein the first data packet set belongs to the first radio bearer; and receiving time of the first data packet set and the delay budget of the data packet of the first radio bearer are jointly used for determining the first moment.

According to one aspect of the present application, it is characterized in that the first signaling indicates the first moment, and the first moment depends on at least the first system frame.

According to one aspect of the present application, it is characterized in that the first signaling comprises a first index, the first index corresponds to a first time interval, and the first time interval comprises the first moment; and the first signaling indicates the first moment.

According to one aspect of the present application, it is characterized in that a first table is used for determining the first index; the first table comprises Q1 indexes and at most Q1 time intervals, the Q1 is a positive integer, and the Q1 is greater than 1; each time interval of the at most Q1 time intervals corresponds to one index of the Q1 indexes, and indexes corresponding to any two time intervals of the at most Q1 time intervals are different; and the first index is one index of the Q1 indexes, and the first time interval is one time interval of the Q1 time intervals.

According to one aspect of the present application, it is characterized in that the first signaling indicates a first time length, and the second moment and the first time length are used for determining the first delay budget; and at least one of the second moment or the first time length depends on the first system frame.

According to one aspect of the present application, it is characterized in that the first signaling indicates the second moment.

According to one aspect of the present application, it is characterized in that the first signaling comprises a first index, the first index corresponds to a first time interval, and the first time interval comprises the first time length; and the first delay budget depends on at least the first system frame.

According to one aspect of the present application, it is characterized in that a first table is used for determining the first index; the first table comprises Q1 indexes and at most Q1 time intervals, the Q1 is a positive integer, and the Q1 is greater than 1; each time interval of the at most Q1 time intervals corresponds to one index of the Q1 indexes, and indexes corresponding to any two time intervals of the at most Q1 time intervals are different; and the first index is one index of the Q1 indexes, and the first time interval is one time interval of the Q1 time intervals.

According to one aspect of the present application, it is characterized in that a cut-off moment of the first delay budget is used for determining to discard the first data packet set.

According to one aspect of the present application, it is characterized in that the first signaling indicates first data information, and the first data information comprises a data volume of at least one data packet in the first data packet set.

According to one aspect of the present application, it is characterized by comprising:
sending target signaling, the target signaling being used for determining a first uplink grant,
wherein the first signaling triggers the target signaling.

The present application discloses a first node for wireless communication, comprising:
a first transmitter for sending first signaling, the first signaling being used for determining a first delay budget and the first delay budget depending on at least a first system frame; or
a first transmitter for sending first signaling, the first signaling indicating a first moment and the first moment being a cut-off moment of a first delay budget,
wherein the first delay budget is a delay budget of a first data packet set; the first data packet set comprises at least one data packet, and each data packet in the first data packet set is a data packet on a MAC sub-layer; and a first system frame number is used for indicating the first system frame, and the first system frame number is an integer.

The present application discloses a second node for wireless communication, comprising:
a second receiver for receiving first signaling, the first signaling being used for determining a first delay budget and the first delay budget depending on at least a first system frame; or
a second receiver for receiving first signaling, the first signaling indicating a first moment and the first moment being a cut-off moment of a first delay budget,
wherein the first delay budget is a delay budget of a first data packet set; the first data packet set comprises at least one data packet, and each data packet in the first data packet set is a data packet on a MAC sub-layer; and a first system frame number is used for indicating the first system frame, and the first system frame number is an integer.

As one embodiment, compared with a traditional solution, the present application has the following advantages:
- . avoiding delay budget deviation caused by factors such as processing delay, radio delay, and retransmission, etc.;
- . improving the accuracy of a reported delay budget; and
- . improving resource scheduling performance.

### Brief Description of the Drawings

Other features, purposes, and advantages of the present application will become more apparent by reading the detailed description of the non-limiting embodiments with reference to the following figures:
FIG. 1 shows a flow chart of a transmission of first signaling according to one embodiment of the present application;
FIG. 2 shows a schematic diagram of a network architecture according to one embodiment of the present application;
FIG. 3 shows a schematic diagram of an embodiment of radio protocol architectures for a user plane and a control plane according to one embodiment of the present application;
FIG. 4 shows a schematic diagram of a first communication device and a second communication device according to one embodiment of the present application;
FIG. 5 shows a radio signal transmission flow chart according to one embodiment of the present application;
FIG. 6 shows a radio signal transmission flow chart according to another embodiment of the present application;
FIG. 7 shows a schematic diagram in which first signaling indicates a first moment and the first moment depends on a first system frame according to one embodiment of the present application;
FIG. 8 shows a schematic diagram in which first signaling indicates a first time length according to one embodiment of the present application;
FIG. 9 shows a schematic diagram in which first signaling indicates a first time length and a second moment according to one embodiment of the present application;
FIG. 10 shows a schematic diagram in which first signaling comprises a first index according to one embodiment of the present application;
FIG. 11 shows a schematic diagram of a first table according to one embodiment of the present application;
FIG. 12 shows a schematic diagram in which a first moment is used for determining to discard a first data packet set according to one embodiment of the present application;
FIG. 13 shows a schematic diagram in which first signaling indicates first data information according to one embodiment of the present application;
FIG. 14 shows a structural block diagram of a processing device for a first node according to one embodiment of the present application;
FIG. 15 shows a structural block diagram of a processing device for a second node according to one embodiment of the present application;
FIG. 16 shows a schematic diagram of a first moment according to one embodiment of the present application;
FIG. 17 shows a schematic diagram of a second moment and a first time length according to one embodiment of the present application;
FIG. 18 shows a schematic diagram of a second moment and a first time length according to another embodiment of the present application; and
FIG. 19 shows a schematic diagram of a first delay budget depending on a first system frame according to one embodiment of the present application.

### Detailed Description of Embodiments

The technical solution of the present application will be further described in detail below in conjunction with the accompanying drawings. It should be explained that in the absence of conflicts, the embodiments in the present application and the features in the embodiments can be arbitrarily combined with each other.

### Embodiment 1

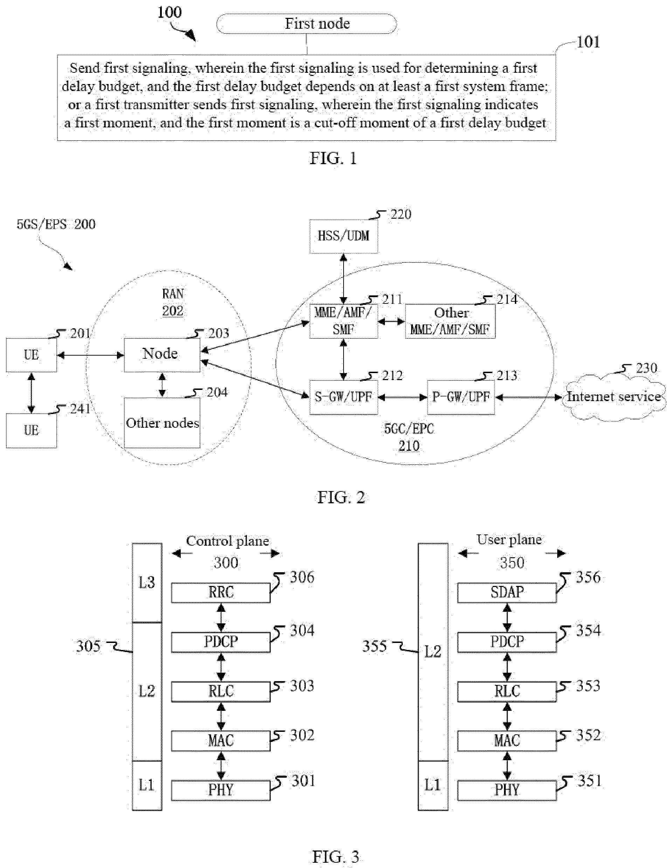

Embodiment 1 illustrates a flow chart of a transmission of first signaling according to one embodiment of the present application, as shown in FIG. 1. In FIG. 1, each block represents one step, and it is particularly important to emphasize that the order of the blocks in the figure does not represent a temporal sequence between the steps represented.

In Embodiment 1, in step 101, a first node in the present application sends first signaling, the first signaling being used for determining a first delay budget and the first delay budget depending on at least a first system frame; or sends first signaling, the first signaling indicating a first moment and the first moment being a cut-off moment of the first delay budget, wherein the first delay budget is a delay budget of a first data packet set; the first data packet set comprises at least one data packet, and each data packet in the first data packet set is a data packet on a MAC sub-layer; and a first system frame number is used for indicating the first system frame, and the first system frame number is an integer.

As one embodiment, the first signaling is transmitted by a PUSCH (Physical Uplink Shared Channel).

As one embodiment, the first signaling is transmitted by a UL-SCH (Uplink Shared Channel).

As one embodiment, the first signaling is transmitted by a PSSCH (Physical Sidelink Shared Channel).

As one embodiment, the first signaling is transmitted by an SL-SCH (Sidelink Shared Channel).

As one embodiment, the first signaling belongs to one RRC (Radio Resource Control) message.

As one embodiment, the first signaling comprises at least one RRC message.

As one embodiment, the first signaling comprises at least one RRC IE (Information Element).

As one embodiment, the first signaling comprises at least one RRC field.

As one embodiment, the first signaling is one RRC message, and one RRC field in the one RRC message indicates the first moment.

As one embodiment, the RRC message included in the first signaling is transmitted by a DCCH (Dedicated Control Channel).

As one embodiment, the RRC message included in the first signaling is transmitted by an SRB1 (Signaling Radio Bearer 1).

As one embodiment, the RRC message included in the first signaling is transmitted by an SRB3 (Signaling Radio Bearer 3).

As one embodiment, the RRC message included in the first signaling is a UEAssistanceInformation message.

As one embodiment, the RRC message included in the first signaling is at least one RRC field in the UEAssistanceInformation message.

As one embodiment, the first signaling comprises at least one RRC message and one MAC (Medium Access Control) CE (Control Element).

As one embodiment, the first signaling comprises at least one RRC message and one DCI (Downlink Control Information).

As one embodiment, the first signaling comprises at least one MAC PDU (Protocol Data Unit).

As one embodiment, the first signaling comprises one MAC PDU.

As one embodiment, the first signaling comprises at least one MAC subPDU.

As one embodiment, the first signaling comprises one MAC subPDU.

As one embodiment, the first signaling belongs to one MAC CE.

As one embodiment, the first signaling belongs to one BSR (Buffer Status Reporting) MAC CE.

As one embodiment, the first signaling is one BSR MAC CE.

As one embodiment, the first signaling comprises at least one MAC CE.

As one embodiment, the first signaling is one MAC CE, and one MAC field in the one MAC CE indicates the first moment.

As one embodiment, the first signaling comprises at least one DCI.

As one embodiment, the first signaling comprises one MAC subPDU, the one MAC subPDU comprises one MAC CE and one MAC subheader, the one MAC subheader comprises one LCID (Logical Channel ID) field, and the one LCID field is not set as any one of 59, 60, 61, or 62.

As one embodiment, the first signaling comprises one MAC subPDU, the one MAC subPDU comprises one MAC CE and one MAC subheader, the one MAC subheader comprises one LCID field, and the one LCID field is set as 37, 38, 39, 40, 41, or 42.

As one embodiment, the first signaling comprises one MAC subPDU, the one MAC subPDU comprises one MAC CE and one MAC subheader, the one MAC subheader comprises one eLCID (extended LCID) field, and the one eLCID field is not set as any one of 245, 246, 247, 248, 249, or 255.

As one embodiment, the first signaling comprises one MAC subPDU, the one MAC subPDU comprises one MAC CE and one MAC subheader, the one MAC subheader comprises one eLCID field, and the one eLCID field is set as an integer not less than 0 and not greater than 228.

As one embodiment, the first signaling comprises one MAC subPDU, the one MAC subPDU comprises one MAC CE and one MAC subheader, the one MAC subheader comprises one eLCID field, and the one eLCID field is set as 228 or 227 or 226 or 225 or 224 or 223 or 222 or 221 or 220 or 219 or 218 or 217 or 216 or 215.

As one embodiment, when the first signaling is sent, at least one data packet in the first data packet set has been sent.

As one embodiment, when the first signaling is sent, any data packet in the first data packet set has not yet been sent.

As one embodiment, the first signaling is used for determining a first delay budget, and the first delay budget depends on at least a first system frame.

As one embodiment, the phrase of the first signaling being used for determining a first delay budget means that: the first signaling indicates the first delay budget.

As one sub-embodiment of this embodiment, the first signaling explicitly indicates the first delay budget.

As one sub-embodiment of this embodiment, the first signaling implicitly indicates the first delay budget.

As one embodiment, the phrase of the first signaling being used for determining the first delay budget means that: the first delay budget depends on a value of at least one field in the first signaling.

As one embodiment, the phrase of the first signaling being used for determining the first delay budget means that: the first signaling indicates a time length of the first delay budget, and the first signaling does not indicate a start moment of the first delay budget.

As one embodiment, the phrase of the first signaling being used for determining the first delay budget means that: the first signaling indicates the start moment of the first delay budget, and the first signaling does not indicate the time length of the first delay budget.

As one embodiment, the phrase of the first signaling being used for determining the first delay budget means that: the first signaling indicates the start moment of the first delay budget and the time length of the first delay budget.

As one embodiment, the first signaling is used for determining a first delay budget, and the first delay budget depends on at least a first system frame; and the first signaling does not indicate the first moment.

As one embodiment, the first signaling is used for determining a first delay budget, and the first delay budget depends on at least a first system frame; and The first signaling does not indicate a first moment, and the first moment is a cut-off moment of the first delay budget.

As one embodiment, the phrase of the first delay budget depending on at least a first system frame comprises: at least the first system frame is used for determining the first delay budget.

As one embodiment, the phrase of the first delay budget depending on at least the first system frame comprises: the first delay budget is related to the first system frame.

As one embodiment, the phrase of the first delay budget depending on at least the first system frame comprises: a value of a field used for determining the first delay budget in the first signaling depends on at least the first system frame.

As one embodiment, the phrase of the first delay budget depending on at least the first system frame comprises: a value of a first system frame field depends on the first system frame.

As one embodiment, the first system frame is a system frame corresponding to the cut-off moment of the first delay budget.

As one embodiment, the first system frame is a system frame corresponding to the start moment of the first delay budget.

As one embodiment, the first system frame is one reference system frame.

As one embodiment, the first system frame is a system frame indicated by the first system frame number.

As one embodiment, the first system frame is one system frame.

As one embodiment, the first system frame is one NR system frame.

As one embodiment, the first system frame is one LTE system frame.

As one embodiment, the first system frame is one 3GPP system frame.

As one embodiment, the first system frame is one TDD (Time Division Duplexing) system frame.

As one embodiment, the first system frame is one FDD (Frequency Division Duplexing) system frame.

As one embodiment, the first system frame is determined by an MIB (Master Information Block).

As one embodiment, the first system frame is determined by a BCH (Broadcast Channel).

As one embodiment, one system frame is one frame.

As one embodiment, one system frame is one radio frame.

As one embodiment, one system frame is one hyper system frame.

As one embodiment, one system frame is one hyper frame.

As one embodiment, one system frame is one direct frame.

As one embodiment, the first signaling indicates the first moment, and the first moment is the cut-off moment of the first delay budget.

As one embodiment, the first signaling indicates K1 moments, and the first moment is one moment of the K1 moments.

As one embodiment, the phrase of "the first signaling indicating the first moment" comprises: the first signaling explicitly indicates the first moment.

As one embodiment, the phrase of "the first signaling indicating the first moment" comprises: the first signaling implicitly indicates the first moment.

As one embodiment, the phrase of "the first signaling indicating the first moment" comprises: the first signaling indicates the index of the first moment.

As one embodiment, the phrase of "the first signaling indicating the first moment" comprises: the first signaling comprises the first moment.

As one embodiment, the phrase of "the first signaling indicating the first moment" comprises: the first signaling comprises an index of the first moment.

As one embodiment, the phrase of "the first signaling indicating the first moment" comprises: the first signaling comprises a first moment field, and the first moment field indicates the first moment.

As one embodiment, the phrase of "the first signaling indicating the first moment" comprises: the first signaling comprises the first moment field, and the first moment field is set as the first moment.

As one embodiment, the phrase of "the first signaling indicating the first moment" comprises: the first signaling comprises the first moment field, and the first moment field is set as the index of the first moment.

As one embodiment, the phrase of "the first signaling indicating the first moment" comprises: the first signaling indicates a time interval to which the first moment belongs.

As one embodiment, the phrase of "the first signaling indicating the first moment" comprises: the first signaling indicates the time to which the first moment belongs.

As one embodiment, the phrase of "the first signaling indicating the first moment" comprises: the first signaling indicates the system frame to which the first moment belongs.

As one embodiment, the phrase of "the first signaling indicating the first moment" comprises: the first signaling indicates a subframe to which the first moment belongs.

As one embodiment, the phrase of "the first signaling indicating the first moment" comprises: the first signaling indicates a slot to which the first moment belongs.

As one embodiment, the first signaling indicates the first moment, and the first moment is the cut-off moment of the first delay budget; and the first signaling does not indicate the start moment of the first delay budget.

As one embodiment, the first signaling indicates the first moment, and the first moment is the cut-off moment of the first delay budget; and the first signaling does not indicate the time length of the first delay budget.

As one embodiment, the first signaling indicates the first moment, and the first moment is the cut-off moment of the first delay budget; and the first signaling does not indicate the start moment of the first delay budget, and the first signaling does not indicate the time length of the first delay budget.

As one embodiment, the first moment is used for determining the cut-off moment of the delay budget of the first data packet set.

As one embodiment, the first moment is a moment determined by the sum of the start moment of the first delay budget and the time length of the first delay budget.

As one embodiment, the first moment is a moment passing the time length of the first delay budget since the start moment of the first delay budget.

As one embodiment, the first moment is one absolute moment.

As one embodiment, the first moment is one relative moment.

As one embodiment, the first moment is one reference moment.

As one embodiment, the first moment is Greenwich Mean Time.

As one embodiment, the first moment is Greenwich Mean Time.

As one embodiment, the first moment is Greenwich Mean Time.

As one embodiment, the unit of the first moment is millisecond (ms).

As one embodiment, the unit of the first moment is slot.

As one embodiment, the unit of the first moment is subframe.

As one embodiment, the unit of the first moment is half frame.

As one embodiment, the unit of the first moment is system frame.

As one embodiment, the first moment is one slot.

As one embodiment, the first moment is one subframe.

As one embodiment, the first moment is one system frame.

As one embodiment, the first moment is determined according to GPS (Global Position System) time.

As one embodiment, the first moment is determined according to UTC (Coordinated Universal Time) time.

As one embodiment, the first moment is the reference UTC time 00:00:00 on Gregorian calendar date 1 January, 1900 (midnight between Thursday, December 31, 1899 and Friday, January 1, 1900).

As one embodiment, the first delay budget is not less than 0.

As one embodiment, the first delay budget is greater than 0.

As one embodiment, the first delay budget is not equal to 0.

As one embodiment, the first delay budget comprises a positive integer number of milliseconds.

As one embodiment, the first delay budget comprises a positive integer number of slots.

As one embodiment, the first delay budget comprises a positive integer number of subframes.

As one embodiment, the first delay budget comprises a positive integer number of half frames.

As one embodiment, the first delay budget comprises a positive integer number of system frames.

As one embodiment, the first delay budget comprises a positive integer number of radio frames.

As one embodiment, the delay budget refers to the data packet delay requirement.

As one embodiment, the delay budget refers to a PDU delay budget.

As one embodiment, the PDU delay budget is a PDB (PDU Delay Budget).

As one embodiment, the PDU delay budget is a PDU-set delay budget.

As one embodiment, the PDU-set delay budget is a PSDB (PDU-Set Delay Budget).

As one embodiment, the delay budget of the first data packet set refers to the PDU delay budget of the first data packet set.

As one embodiment, the delay budget of the first data packet set refers to the remaining PDU delay budget of the first data packet set.

As one embodiment, the delay budget of the first data packet set refers to the total PDU delay budget of the first data packet set.

As one embodiment, the delay budget of the first data packet set refers to the current PDU delay budget of the first data packet set.

As one embodiment, the delay budget of the first data packet set refers to the remaining PDU delay budget of the first data packet set when the first signaling is sent.

As one embodiment, the delay budget of the first data packet set refers to the remaining PDU delay budget of the first data packet set when the first signaling is assembled.

As one embodiment, the delay budget of the first data packet set refers to the remaining PDU delay budget of the first data packet set when the content in the first signaling is set.

As one embodiment, the delay budget of the first data packet set refers to the remaining PDU delay budget of the first data packet set when the field used for indicating the first delay budget in the first signaling is set.

As one embodiment, the first data packet set is one data packet set.

As one embodiment, the first data packet set is one data packet set of a plurality of data packet sets.

As one sub-embodiment of this embodiment, the plurality of data packet sets belong to one logical channel group (LCG).

As one sub-embodiment of this embodiment, the plurality of data packet sets belong to one radio bearer (RB).

As one sub-embodiment of this embodiment, the plurality of data packet sets belong to a plurality of logical channels (LCHs).

As one sub-embodiment of this embodiment, the first data packet set is one data packet set of the plurality of data packet sets that has the largest delay budget.

As one sub-embodiment of this embodiment, the first data packet set is one data packet set of the plurality of data packet sets that has the smallest delay budget.

As one sub-embodiment of this embodiment, the first data packet set is one data packet set of the plurality of data packet sets that has the highest priority.

As one auxiliary embodiment of this sub-embodiment, a priority of one data packet set is a priority of a logical channel to which the data packet set belongs.

As one auxiliary embodiment of this sub-embodiment, a priority of one data packet set is a priority of a logical channel to which the data packet set belongs.

As one embodiment, the first data packet set is one data packet set.

As one embodiment, at least two data packets in one data packet set have a dependency relationship.

As one embodiment, any two data packets in one data packet set have the dependency relationship.

As one embodiment, one data packet set comprises at least one data packet.

As one embodiment, one data packet set comprises a plurality of data packets.

As one embodiment, one data packet set comprises a finite number of data packets.

As one embodiment, one data packet set is one PDU set.

As one embodiment, data packets in one data packet set having the dependency relationship comprises: any two data packets in the data packet set have the dependency relationship.

As one embodiment, data packets in one data packet set having the dependency relationship comprises: any data packet in the data packet set depends on at least one data packet other than the data packet in the one data packet set.

As one embodiment, data packets in one data packet set having the dependency relationship comprises: decoding of any data packet in the one data packet set depends on at least one data packet other than the data packet in the one data packet set.

As one embodiment, data packets in one data packet set having the dependency relationship comprises: a picture of any data packet in the one data packet set depends on at least one data packet other than the data packet in the one data packet set.

As one embodiment, data packets in one data packet set having the dependency relationship comprises: the QoS of any data packet in the one data packet set depends on at least one data packet other than the data packet in the one data packet set.

As one embodiment, the data packets in one data packet set having the dependency relationship comprises: all data packets in the one data packet set are used for constructing the same picture.

As one embodiment, the data packets in one data packet set having the dependency relationship comprises: all data packets in the one data packet set belong to the same QoS flow.

As one embodiment, the data packets in one data packet set having the dependency relationship comprises: there is a delay requirement for all data packets in the one data packet set.

As one embodiment, the data packets in one data packet set having the dependency relationship comprises: the delay budget for all data packets in the one data packet set cannot exceed one threshold value.

As one embodiment, each data packet in one data packet set is one data packet on the MAC sub-layer.

As one embodiment, one data packet set is associated with one PDCP (Packet Data Convergence Protocol) entity.

As one embodiment, one data packet set is associated with a plurality of PDCP entities.

As one embodiment, one data packet set is not associated with the plurality of PDCP entities.

As one embodiment, one data packet set is associated with only one DRB (Data Radio Bearer).

As one embodiment, one data packet set is associated with a plurality of DRBs.

As one embodiment, one data packet set is associated with one or more DRBs.

As one embodiment, all data packets in one data packet set belong to the same LCG.

As one embodiment, any two data packets in one data packet set belong to different LCGs.

As one embodiment, there are two data packets in one data packet set belonging to different LCGs.

As one embodiment, any two data packets in one data packet set belong to the same LCG.

As one embodiment, any two data packets in one data packet set belong to the same logical channel of the same LCG.

As one embodiment, any two data packets in one data packet set belong to different logical channels of the same LCG.

As one embodiment, each data packet in one data packet set is an uplink data packet.

As one embodiment, each data packet in one data packet set is a backhaul link data packet.

As one embodiment, each data packet in one data packet set is a sidelink data packet.

For the one embodiment, at least one data packet in one data packet set is a buffered data packet.

For the one embodiment, each data packet in one data packet set is the buffered data packet.

For the one embodiment, at least one data packet in one data packet set is an expected data packet.

For the one embodiment, each data packet in one data packet set is the expected data packet.

As one embodiment, one data packet in one data packet set is one PDU.

As one embodiment, one data packet in one data packet set is a payload of one PDU.

As one embodiment, one data packet in one data packet set is one SDU (Service Data Unit).

As one embodiment, one data packet in one data packet set is a payload of one SDU.

As one embodiment, one data packet in one data packet set is one IP (Internet Protocol) packet.

As one embodiment, one data packet in one data packet set is a payload of one IP packet.

As one embodiment, one data packet in one data packet set is one IP PDU.

As one embodiment, one data packet in one data packet set is one application layer PDU.

As one embodiment, one data packet in one data packet set is one application layer SDU.

As one embodiment, one data packet in one data packet set is one non-access layer PDU.

As one embodiment, one data packet in one data packet set is one non-access layer SDU.

As one embodiment, one data packet in one data packet set is one PDU of an SDAP (Service Data Adaptation Protocol) layer.

As one embodiment, one data packet in one data packet set is one SDAP PDU.

As one embodiment, one data packet in one data packet set is one SDAP SDU.

As one embodiment, one data packet in one data packet set is a data packet of a PDCP sub-layer.

As one embodiment, one data packet in one data packet set is one PDCP PDU.

As one embodiment, one data packet in one data packet set is one PDCP SDU.

As one embodiment, one data packet in one data packet set is one PDCP Control PDU.

As one embodiment, one data packet in one data packet set is one PDCP Data PDU.

As one embodiment, one data packet in one data packet set is one PDCP Data PDU to be retransmitted for an AM (Acknowledged Mode) DRB.

As one embodiment, one data packet in one data packet set is one PDCP SDU to be retransmitted for the AM DRB.

As one embodiment, one data packet in one data packet set is a data packet of an RLC sub-layer.

As one embodiment, one data packet in one data packet set is one RLC PDU.

As one embodiment, one data packet in one data packet set is one RLC SDU.

As one embodiment, one data packet in one data packet set is one RLC SDU segment.

As one embodiment, one data packet in one data packet set is one RLC data PDU to be initially transmitted.

As one embodiment, one data packet in one data packet set is one RLC data PDU to be retransmitted for an RLC AM.

As one embodiment, the first system frame number is used for indicating the first system frame.

As one embodiment, the first system frame number is used for indicating the first system frame in one SFN period.

As one embodiment, the first system frame number indicates one SFN in one SFN period.

As one embodiment, the first system frame number is the SFN of the first system frame in one SFN period.

As one embodiment, the first system frame number is one frame number.

As one embodiment, the first system frame number is the number of one system frame.

As one embodiment, the first system frame number is one system frame number (SFN).

As one embodiment, the first system frame number is one hyper system frame number (HSFN).

As one embodiment, the first system frame number is one hyper frame number (HFN).

As one embodiment, the first system frame number is one direct frame number (DFN).

As one embodiment, the first system frame number is one positive integer.

As one embodiment, the first system frame number is one non-negative integer.

As one embodiment, the first system frame number is an integer not less than 0 and not greater than 511.

As one embodiment, the first system frame number is an integer not less than 0 and not greater than 1023.

As one embodiment, the first system frame number is an integer not less than 0 and not greater than 2047.

As one embodiment, the cut-off moment of the first delay budget is used for determining one indication to be sent to a higher layer.

As one embodiment, the cut-off moment of the first delay budget is used for determining one indication to be sent to a lower layer.

As one embodiment, at the cut-off moment of the first delay budget, the lower layer of the first node sends one indication to the higher layer; and the first node receives the one indication at the higher layer.

As one embodiment, at the cut-off moment of the first delay budget, the higher layer of the first node sends one indication to the lower layer; and the first node receives the one indication at the lower layer.

As one embodiment, a first timer is used for determining the first delay budget.

As one embodiment, a moment when the first timer expires is the cut-off moment of the first delay budget.

As one embodiment, the first delay budget is the remaining time of the first timer.

As one embodiment, the first timer is configured.

As one embodiment, the first timer is not configured.

As one embodiment, the first timer does not exist.

As one embodiment, when the first timer expires, the lower layer of the first node sends one indication to the higher layer; and the first node receives the one indication at the higher layer.

As one embodiment, when the first timer expires, the higher layer of the first node sends one indication to the lower layer; and the first node receives the one indication at the lower layer.

### Embodiment 2

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as a 5GS (5G System)/EPS (Evolved Packet System) 200 or some other suitable terms. The 5GS/EPS 200 comprises at least one of UE (User Equipment) 201, a RAN (Radio Access Network) 202, a 5GC (5G Core Network)/EPC (Evolved Packet Core) 210, an HSS (Home Subscriber Server)/UDM (Unified Data Management) 220, and an Internet service 230. 5GS/EPS can be interconnected with other access networks, but for simplicity, these entities/interfaces are not shown. As shown, the 5GS/EPS provides packet-switched services, but those skilled in the art will readily appreciate that various concepts presented throughout the present application may be extended to a network providing a circuit-switched service or other cellular networks. RAN comprises a source node 203 and other nodes 204. The node 203 provides user and control plane protocol termination towards UE201. The node 203 can be connected to other nodes 204 via an Xn interface (e.g., backhaul)/X2 interface. The node 203 may also be referred to as a base station, a base transceiving station, a radio base station, a radio transceiver, a transceiver function, a basic service set (BSS), an extended service set (ESS), a TRP (Transmitter Receiver Point), or some other suitable terms. The node 203 provides an access point to 5GC/EPC210 for UE201. Examples of UE201 comprises a cellular phone, a smart phone, a session initiation protocol (SIP) phone, a laptop, a personal digital assistant (PDA), a satellite radio, a non-terrestrial base station communication, a satellite mobile communication, a global positioning system, a multimedia device, a video device, a digital audio player (for example, an MP3 player), a camera, a game console, a drone, an aircraft, a narrowband Internet of Things device, a machine type communication device, a land vehicle, an automobile, a wearable device, or any other similarly functional device. Those skilled in the art may also call the UE201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms. The node 203 is connected to 5GC/EPC210 by an S1/NG interface. 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between UE201 and 5GC/EPC210. Generally, the MME/AMF/SMF211 provides bearer and connection management. All user IP (Internet Protocol) packets are communicated by the S-GW/UPF212, and the S-GW/UPF212 is connected to the P-GW/UPF213. The P-GW provides UE IP address allocation and other functions. The P-GW/UPF213 is connected to the Internet service 230. The Internet service 230 comprises an Internet protocol service corresponding to an operator, and may specifically comprise the Internet, an intranet, an IMS (IP Multimedia Subsystem) and a packet switching streaming service.

As one embodiment, the UE201 corresponds to the first node in the present application.

As one embodiment, the UE201 is one piece of user equipment (UE).

As one embodiment, the UE201 is one base station device (BS).

As one embodiment, the UE201 is one relay device.

As one embodiment, the node 203 corresponds to the second node in the present application.

As one embodiment, the node 203 is one base station device.

As one embodiment, the node 203 is a user device.

As one embodiment, the node 203 is one relay device.

As one embodiment, the node 203 is a gateway.

As one embodiment, the user equipment supports a transmission in a terrestrial network.

As one embodiment, the user equipment supports a transmission in a non-terrestrial network (NTN).

As one embodiment, the user equipment supports a transmission in a large delay difference network.

As one embodiment, the user equipment supports a dual connection (DC) transmission.

As one embodiment, the user device comprises a handheld terminal.

As one embodiment, the user device comprises a wearable device.

As one embodiment, the user device comprises an aircraft.

As one embodiment, the user device comprises a vehicle terminal.

As one embodiment, the user device comprises a ship.

As one embodiment, the user device comprises an Internet of Things terminal.

As one embodiment, the user device comprises an industrial Internet of Things terminal.

As one embodiment, the user equipment comprises a device that supports a low-delay and high-reliability transmission.

As one embodiment, the user equipment comprises a test device.

As one embodiment, the user equipment comprises a signaling tester.

As one embodiment, the base station device comprises a base transceiver station (BTS).

As one embodiment, the base station device comprises a node B (NodeB, NB).

As one embodiment, the base station device comprises a gNB.

As one embodiment, the base station device comprises an eNB.

As one embodiment, the base station device comprises an ng-eNB.

As one embodiment, the base station device comprises an en-gNB.

As one embodiment, the base station device supports the transmission in the non-terrestrial network.

As one embodiment, the base station device supports the transmission in the large delay difference network.

As one embodiment, the base station device supports the transmission in the terrestrial network.

As one embodiment, the base station device comprises a macro cellular base station.

As one embodiment, the base station device comprises a micro cell base station.

As one embodiment, the base station device comprises a pico cell base station.

As one embodiment, the base station device comprises a femtocell.

As one embodiment, the base station device comprises a base station device that supports a large delay difference.

As one embodiment, the base station device comprises a flight platform device.

As one embodiment, the base station device comprises a satellite device.

As one embodiment, the base station device comprises a TRP (Transmitter Receiver Point).

As one embodiment, the base station device comprises a CU (Centralized Unit).

As one embodiment, the base station device comprises a DU (Distributed Unit).

As one embodiment, the base station device comprises a test device.

As one embodiment, the base station device comprises a signaling tester.

As one embodiment, the base station device comprises an IAB (Integrated Access and Backhaul)-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the relay device comprises a relay.

As one embodiment, the relay device comprises an L3 relay.

As one embodiment, the relay device comprises an L2 relay.

As one embodiment, the relay device comprises a router.

As one embodiment, the relay device comprises a switch.

As one embodiment, the relay device comprises user equipment.

As one embodiment, the relay device comprises a base station device.

### Embodiment 3

Embodiment 3 shows a schematic diagram of an embodiment of radio protocol architectures for one user plane and one control plane according to the present application, as shown in FIG. 3. FIG. 3 is a schematic diagram illustrating an embodiment of a radio protocol architecture for a user plane 350 and a control plane 300, and FIG. 3 shows the radio protocol architecture for the control plane 300 by using three layers: layer 1, layer 2, and layer 3. The layer 1 (L1 layer) is the lowest layer and implements various PHY (physical layer) signal processing functions. The L1 layer will be herein referred to as PHY301. The layer 2 (L2 layer) 305 is on the PHY301 and comprises a MAC (Medium Access Control) sub-layer 302, a RLC (Radio Link Control) sub-layer 303, and a PDCP (Packet Data Convergence Protocol) sub-layer 304. The PDCP sub-layer 304 provides multiplexing between different radio bearer and logical channels. The PDCP sub-layer 304 also provides security by encrypting data packets and provides zone-crossing mobility support. The RLC sub-layer 303 provides segmentation and reassembly of upper-layer packets, retransmission of lost data packets, and reordering of data packets to compensate for unordered reception caused by a HARQ (Hybrid Automatic Repeat Request). The MAC sub-layer 302 provides multiplexing between logical and transmission channels. The MAC sub-layer 302 is also responsible for allocating various radio resources (e.g., resource blocks) in one cell. The MAC sub-layer 302 is also responsible for HARQ operations. The RRC (Radio Resource Control) sub-layer 306 in the layer 3 (L3 layer) in the control plane 300 is responsible for obtaining radio resources (i.e., radio bearers) and configuring lower layers by using RRC signaling. The radio protocol architecture for the user plane 350 comprises a layer 1 (L1 layer) and a layer 2 (L2 layer). The radio protocol architecture in the user plane 350 for the physical layer 351, the PDCP sub-layer 354 in the L2 layer 355, the RLC sub-layer 353 in the L2 layer 355, and the MAC sub-layer 352 in the L2 layer 355 is substantially the same as that in the control plane 300 for the corresponding layers and sub-layers, but the PDCP sub-layer 354 also provides header compression for upper-layer data packets to reduce radio transmission overhead. The L2 layer 355 in the user plane 350 further comprises an SDAP (Service Data Adaptation Protocol) sub-layer 356, and the SDAP sub-layer 356 is responsible for mapping between a QoS stream and a data radio bearer (DRB) to support the diversity of services.

As one embodiment, the radio protocol architecture in FIG. 3 is applicable to the first node in the present application.

As one embodiment, the radio protocol architecture in FIG. 3 is applicable to the second node in the present application.

As one embodiment, the first signaling in the present application is generated in the RRC306.

As one embodiment, the first signaling in the present application is generated in the MAC302 or the MAC352.

As one embodiment, the first signaling in the present application is generated in the PHY301 or the PHY351.

As one embodiment, the first message in the present application is generated in the RRC306.

As one embodiment, the first message in the present application is generated in the SDAP356.

As one embodiment, the first message in the present application is generated in the PDCP304 or the PDCP354.

### Embodiment 4

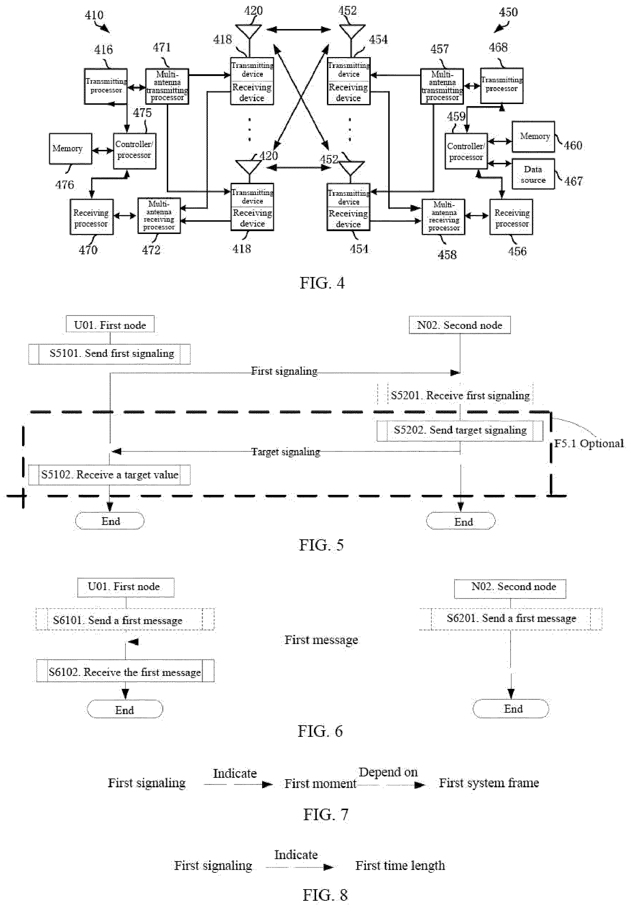

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454 and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In the transmission from the second communication device 410 to the first communication device 450, at the second communication device 410, an upper-layer data packet from a core network is provided to the controller/processor 475. The controller/processor 475 implements the functionality of the L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of a lost packet, and for signaling to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410, as well as mapping of signal constellations based on various modulation schemes (for example, binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding (comprising codebook-based precoding and non-codebook-based precoding) and beamforming processing on the coded and modulated symbols to generate one or more spatial streams. The transmitting processor 416 then maps each spatial stream to a subcarrier, multiplexes with a reference signal (for example, a pilot frequency) in a time domain and/or frequency domain, and subsequently uses an inverse fast Fourier transform (IFFT) to generate a physical channel carrying a time-domain multi-carrier symbol stream. Subsequently, the multi-antenna transmitting processor 471 performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, which is subsequently provided to a different antenna 420.

In the transmission from the second communication device 410 to the first communication device 450, at the first communication device 450, each receiving device 454 receives a signal by a corresponding antenna 452 thereof. Each receiving device 454 recovers the information modulated onto the RF carrier and converts the RF stream into the baseband multi-carrier symbol stream to be provided to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream after the receiving analog precoding/beamforming operation from the time domain to the frequency domain. In the frequency domain, a physical layer data signal and the reference signal are demultiplexed by the receiving processor 456, wherein the reference signal will be used for channel estimation, and the data signal is subjected to multi-antenna detection in the multi-antenna receiving processor 458 to recover any spatial stream with the first communication device 450 as the destination. The symbols on each spatial stream are demodulated and recovered in the receiving processor 456, and a soft decision is generated. Subsequently, the receiving processor 456 decodes and deinterleaves the soft decision to recover the upper-layer data and a control signal transmitted by the second communication device 410 on the physical channel. Subsequently, the upper-layer data and the control signal are provided to the controller/processor 459. The controller/processor 459 implements the functions of the L2 layer. The controller/processor 459 may be associated with a memory 460 storing program codes and data. The memory 460 may be referred to as a computer-readable medium. In the transmission from the second communication device 410 to the first communication device 450, the controller/processor 459 provides demultiplexing between transport and logical channels, packet reassembly, decryption, header decompression, and control signal processing to recover the upper-layer data packet from the core network. Subsequently, the upper-layer data packet is provided to all protocol layers above the L2 layer. Various control signals may also be provided to an L3 for L3 processing.

In the transmission from the first communication device 450 to the second communication device 410, at the first communication device 450, a data source 467 is used for providing the upper-layer data packet to the controller/processor 459. The data source 467 represents all protocol layers above the L2 layer. Similar to the sending function at the second communication device 410 described in the transmission from the second communication device 410 to the first communication device 450, the controller/processor 459 implements header compression, encryption, packet segmentation and reordering, and multiplexing between logical and transport channels based on wireless resource allocation, and implements L2 layer functions for the user plane and the control plane. The controller/processor 459 is also responsible for the retransmission of the lost packet, and for signaling to the second communication device 410. The transmitting processor 468 performs modulation mapping and channel coding processing, and the multi-antenna transmitting processor 457 performs digital multi-antenna spatial precoding (comprising codebook-based precoding and non-codebook-based precoding) and beamforming processing. Subsequently, the transmitting processor 468 modulates the generated spatial stream into a multi-carrier/single-carrier symbol stream, which is provided to a different antenna 452 via the transmitting device 454 after an analog precoding/beamforming operation in the multi-antenna transmitting processor 457. Each transmitting device 454 first converts the baseband symbol stream provided by the multi-antenna transmitting processor 457 into a radio frequency symbol stream, which is then provided to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal by a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the L2 layer functions. The controller/processor 475 may be associated with a memory 476 storing program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover the upper-layer data packet from the UE450. The upper-layer data packet from the controller/processor 475 can be provided to the core network.

As one embodiment, the first communication device 450 comprises: at least one processor and at least one memory, wherein the at least one memory comprises a computer program code; and the at least one memory and the computer program code are configured to be used with the at least one processor, and the first communication device 450 at least: sends first signaling, the first signaling being used for determining a first delay budget and the first delay budget depending on at least a first system frame; or sends first signaling, the first signaling indicating a first moment and the first moment being a cut-off moment of the first delay budget, wherein the first delay budget is a delay budget of a first data packet set; the first data packet set comprises at least one data packet, and each data packet in the first data packet set is a data packet on a MAC sub-layer; and a first system frame number is used for indicating the first system frame, and the first system frame number is an integer.

As one embodiment, the first communication device 450 comprises: a memory storing a computer-readable instruction program, the computer-readable instruction program generates actions when executed by at least one processor, and the action comprises: sending first signaling, the first signaling being used for determining a first delay budget and the first delay budget depending on at least a first system frame; or sends first signaling, the first signaling indicating a first moment and the first moment being a cut-off moment of the first delay budget, wherein the first delay budget is a delay budget of a first data packet set; the first data packet set comprises at least one data packet, and each data packet in the first data packet set is a data packet on a MAC sub-layer; and a first system frame number is used for indicating the first system frame, and the first system frame number is an integer.

As one embodiment, the second communication device 410 comprises: at least one processor and at least one memory, wherein the at least one memory comprises a computer program code; and the at least one memory and the computer program code are configured to be used with the at least one processor. The second communication device 410 at least: receives first signaling, the first signaling being used for determining a first delay budget and the first delay budget depending on at least a first system frame; or receives first signaling, the first signaling indicating a first moment and the first moment being a cut-off moment of the first delay budget, wherein the first delay budget is a delay budget of a first data packet set; the first data packet set comprises at least one data packet, and each data packet in the first data packet set is a data packet on a MAC sub-layer; and a first system frame number is used for indicating the first system frame, and the first system frame number is an integer.

As one embodiment, the second communication device 410 comprises: a memory storing a computer-readable instruction program, the computer-readable instruction program generates actions when executed by at least one processor, and the action comprises: receiving first signaling, the first signaling being used for determining a first delay budget and the first delay budget depending on at least a first system frame; or receives first signaling, the first signaling indicating a first moment and the first moment being a cut-off moment of the first delay budget, wherein the first delay budget is a delay budget of a first data packet set; the first data packet set comprises at least one data packet, and each data packet in the first data packet set is a data packet on a MAC sub-layer; and a first system frame number is used for indicating the first system frame, and the first system frame number is an integer.

As one embodiment, at least one of the antenna 452, the receiving device 454, the receiving processor 456, and the controller/processor 459 is used for receiving a first message.

As one embodiment, at least one of the antenna 420, the transmitting device 418, the transmitting processor 416, and the controller/processor 475 is used for sending the first message.

As one embodiment, at least one of the antenna 452, the transmitting device 454, the transmitting processor 468, and the controller/processor 459 is used for sending the first message.

As one embodiment, at least one of the antenna 452, the transmitting device 454, the transmitting processor 468, and the controller/processor 459 is used for sending the first signaling.

As one embodiment, at least one of the antenna 420, the receiving device 418, the receiving processor 470, and the controller/processor 475 is used for receiving the first signaling.

As one embodiment, the first communication device 450 corresponds to the first node in the present application.

As one embodiment, the second communication device 410 corresponds to the second node in the present application.

As one embodiment, the first communication device 450 is one piece of user equipment.

As one embodiment, the first communication device 450 is one base station device.

As one embodiment, the first communication device 450 is one relay device.

As one embodiment, the second communication device 410 is one piece of user equipment.

As one embodiment, the second communication device 410 is one base station device.

As one embodiment, the second communication device 410 is one relay device.

### Embodiment 5

Embodiment 5 illustrates a radio signal transmission flow chart according to one embodiment of the present application, as shown in FIG. 5. It is particularly explained that the order in the present example does not limit the signal transmission order and the implementation order in the present application.

For **a first node U01**, in step S5101, first signaling is sent, wherein the first signaling is used for determining a first delay budget, and the first delay budget depends on at least a first system frame; or in step S5101, the first signaling is sent, wherein the first signaling indicates a first moment, and the first moment is a cut-off moment of the first delay budget; and in step S5102, target signaling is received.

For **a second node N02**, in step S5201, the first signaling is received; and in step S5202, the target signaling is sent.

In Embodiment 5, the first delay budget is a delay budget of a first data packet set; the first data packet set comprises at least one data packet, and each data packet in the first data packet set is a data packet on a MAC sub-layer; the first system frame number is used for indicating the first system frame, and the first system frame number is an integer; the target signaling is used for determining a first uplink grant; and the first signaling triggers the target signaling.

As one embodiment, the first node U01 is one piece of user equipment.

As one embodiment, the first node U01 is one base station device.

As one embodiment, the first node U01 is one relay device.

As one embodiment, the second node N02 is one base station device.

As one embodiment, the second node N02 is one piece of user equipment.

As one embodiment, the second node N02 is one relay device.

As one embodiment, the first node U01 is one piece of user equipment and the second node N02 is a base station device.

As one embodiment, the first node U01 is one piece of user equipment and the second node N02 is one relay device.

As one embodiment, the first node U01 is one piece of user equipment and the second node N02 is one piece of user equipment.

As one embodiment, the first node U01 is one base station device, and the second node N02 is one base station device.

As one embodiment, the first node U01 is one relay device, and the second node N02 is one base station device.

As one embodiment, the second node N02 determines the first moment according to the first signaling.

As one embodiment, the second node N02 determines the first delay budget according to the first signaling.

As one embodiment, the second node N02 determines a cut-off moment of the first delay budget according to the first signaling.

As one embodiment, the second node N02 determines a sending moment of the target signaling according to the first signaling.

As one embodiment, after at least the first signaling is sent, the first node U01 receives the target signaling.

As one embodiment, in response to the first signaling being received, the second node N02 sends the target signaling.

As one embodiment, the target signaling comprises one MAC CE.

As one embodiment, the target signaling comprises one DCI.

As one embodiment, the target signaling is one MAC CE.

As one embodiment, the target signaling is one DCI.

As one embodiment, the target signaling is scrambled by a C-RNTI (Cell Radio Network Temporary Identifier) of the first node U01.

As one embodiment, a DCI format of the target signaling is DCI format 0_0.

As one embodiment, the DCI format of the target signaling is DCI format 0_1.

As one embodiment, the DCI format of the target signaling is DCI format 0_2.

As one embodiment, the target signaling does not indicate any object.

As one embodiment, the target signaling is used for indicating a first uplink grant.

As one embodiment, the target signaling is used for configuring the first uplink grant.

As one embodiment, the target signaling is used for activating the first uplink grant.

As one embodiment, the first uplink grant is one dynamic grant (DG) resource.

As one embodiment, the first uplink grant is one configured grant (CG) resource.

As one embodiment, the target signaling indicates at least one object, and the first uplink grant is used for the at least one object.

As one embodiment, the target signaling indicates an identifier of each object of the at least one object.

As one embodiment, the target signaling comprises one MAC CE, and the one MAC CE in the target signaling indicates the at least one object.

As one embodiment, the target signaling is one DCI, and one field in the one DCI indicates the at least one object.

As one embodiment, the at least one object is one object.

As one embodiment, the at least one object comprises one or more objects.

As one embodiment, one object of the at least one object is related to the first data packet set.

As one embodiment, each object of the at least one object is related to the first data packet set.

As one embodiment, each object of the at least one object is one logical channel.

As one embodiment, each object of the at least one object is one logical channel group.

As one embodiment, each object of the at least one object is one radio bearer.

As one embodiment, each object of the at least one object is one data radio bearer.

As one embodiment, each object of the at least one object is one data packet set.

As one embodiment, each object of the at least one object is one data packet set.

As one embodiment, one object of the at least one object is a logical channel to which the first data packet set belongs.

As one embodiment, one object of the at least one object is the logical channel group to which the first data packet set belongs.

As one embodiment, one object of the at least one object is a radio bearer to which the first data packet set belongs.

As one embodiment, one object of the at least one object is a data radio bearer to which the first data packet set belongs.

As one embodiment, one object of the at least one object is the first data packet set.

As one embodiment, the dotted-line block F5.1 is optional.

As one embodiment, the dotted-line block F5.1 exists.

As one embodiment, the dotted-line block F5.1 does not exist.

As one embodiment, the step S5201 is optional.

As one embodiment, the step S5201 exists.

As one embodiment, the step S5201 does not exist.

### Embodiment 6

Embodiment 6 illustrates a radio signal transmission flow chart according to another embodiment of the present application, as shown in FIG. 6. It is particularly explained that the order in the present example does not limit the signal transmission order and the implementation order in the present application.

For **a first node U01,** in step S6101, a first message is sent, wherein the first message indicates a delay budget of a data packet of a first radio bearer; and in step S6102, a first message is received, wherein the first message indicates the delay budget of the data packet of the first radio bearer.

For **a second node N02,** in step S6201, the first message is sent.

In Embodiment 6, the first data packet set belongs to the first radio bearer; and receiving time of the first data packet set and the delay budget of the data packet of the first radio bearer are jointly used for determining the first moment.

As one embodiment, the first message is one inter-layer message.

As one embodiment, a sender of the first message is the first node U01.

As one embodiment, the sender of the first message is the second node N02.

As one embodiment, a higher layer of the first node U01 sends the first message, and a lower layer of the first node U01 receives the first message.

As one sub-embodiment of this embodiment, the higher layer is a protocol layer on the PDCP sub-layer, and the lower layer is a PDCP sub-layer or a protocol layer under the PDCP sub-layer.

As one sub-embodiment of this embodiment, the higher layer is a protocol layer on the SDAP sub-layer, and the lower layer is a SDAP sub-layer or a protocol layer under the SDAP sub-layer.

As one sub-embodiment of this embodiment, the higher layer is a protocol layer on an IP layer, and the lower layer is the IP layer or a protocol layer under the IP layer.

As one sub-embodiment of this embodiment, the higher layer is an application layer.

As one sub-embodiment of this embodiment, the higher layer is the IP layer.

As one sub-embodiment of this embodiment, the lower layer is a SDAP sub-layer.

As one sub-embodiment of this embodiment, the lower layer is a PDCP sub-layer.

As one sub-embodiment of this embodiment, the higher layer is a MAC sub-layer.

As one embodiment, the second node N02 sends the first message, and the first node U01 receives the first message.

As one sub-embodiment of this embodiment, the first message is one RRC message.

As one sub-embodiment of this embodiment, the first message is one RRCReconfiguration message.

As one sub-embodiment of this embodiment, the first message is one RRCResume message.

As one sub-embodiment of this embodiment, the first message is one MAC CE.

As one sub-embodiment of this embodiment, the first message is transmitted by radio.

As one embodiment, the first message comprises the delay budget of the data packet of the first radio bearer.

As one embodiment, the delay budget of the data packet of the first radio bearer refers to the delay budget of the data packet configured for the first radio bearer.

As one embodiment, the delay budget of the data packet of the first radio bearer refers to the delay budget of the data packet of the first radio bearer.

As one embodiment, the delay budget of the data packet of the first radio bearer refers to a maximum delay requirement of the data packet of the first radio bearer.

As one embodiment, the delay budget of the data packet of the first radio bearer refers to a maximum delay requirement of each data packet of the first radio bearer.

As one embodiment, the delay budget of the data packet of the first radio bearer refers to the delay budget of the data packet set of the first radio bearer.

As one embodiment, the delay budget of the data packet of the first radio bearer refers to the delay budget of each data packet set of the first radio bearer.

As one embodiment, the delay budget of the data packet of the first radio bearer is one time length.

As one embodiment, the delay budget of the data packet of the first radio bearer is a positive integer number of milliseconds.

As one embodiment, the delay budget of the data packet of the first radio bearer is a positive integer number of slots.

As one embodiment, the delay budget of the data packet of the first radio bearer is a positive integer number of subframes.

As one embodiment, the delay budget of the data packet of the first radio bearer is a positive integer number of half frames.

As one embodiment, the delay budget of the data packet of the first radio bearer is a positive integer number of system frames.

As one embodiment, the delay budget of the data packet of the first radio bearer is configurable.

As one embodiment, the phrase of the first data packet set belonging to the first radio bearer comprises: each data packet in the first data packet set belongs to the first radio bearer.

As one embodiment, the phrase of the first data packet set belonging to the first radio bearer comprises: at least one data packet in the first data packet set belongs to the first radio bearer.

As one embodiment, the first data packet set is mapped to the first radio bearer.

As one embodiment, the first data packet set belongs to at least the first radio bearer.

As one embodiment, the first data packet set belongs to a plurality of radio bearers, and the first radio bearer is one radio bearer of the plurality of radio bearers.

As one embodiment, at least one data packet in the first data packet set belongs to one radio bearer other than the first radio bearer.

As one embodiment, the first moment is a moment after the receiving moment of the first data packet set and the delay budget of the data packet of the first radio bearer.

As one embodiment, the first moment is a moment corresponding to the sum of the receiving moment of the first data packet set and the delay budget of the data packet of the first radio bearer.

As one embodiment, the receiving time of the first data packet set is the receiving time of the first data packet in the first data packet set.

As one embodiment, the receiving time of the first data packet set is the receiving time of the last data packet in the first data packet set.

As one embodiment, the receiving time of the first data packet set is the receiving time of each data packet in the first data packet set.

As one embodiment, the receiving time of the first data packet set is used for starting the first timer.

As one embodiment, the receiving time of the first data packet set is used for starting or restarting the first timer.

As one embodiment, the first timer is started at the receiving time of the first data packet set.

As one embodiment, the first timer is started or restarted at the receiving time of the first data packet set.

As one embodiment, the step S6201 is optional.

As one embodiment, the step S6201 exists.

As one embodiment, the step S6201 does not exist.

As one embodiment, the step S6101 is optional.

As one embodiment, the step S6101 exists.

As one embodiment, the step S6101 does not exist.

As one embodiment, at least one of the step S6101 or the step S6201 exists.

### Embodiment 7

Embodiment 7 illustrates a schematic diagram in which first signaling indicates a first moment and the first moment depends on a first system frame according to one embodiment of the present application.

In Embodiment 7, the first signaling indicates the first moment, and the first moment depends on at least the first system frame.

As one embodiment, the first signaling indicates the first moment, the first moment is a cut-off moment of a first delay budget, and the first moment depends on at least the first system frame.

As one embodiment, the first signaling indicates the first moment, the first moment is the cut-off moment of the first delay budget, the first moment depends on at least the first system frame, and the first system frame is the system frame corresponding to the cut-off moment of the first delay budget.

As one embodiment, a first transmitter sends first signaling, the first signaling indicates the first moment, the first moment is the cut-off moment of the first delay budget, and the first moment depends on at least the first system frame, wherein the first delay budget is a delay budget of a first data packet set; the first data packet set comprises at least one data packet, and each data packet in the first data packet set is a data packet on a MAC sub-layer; and a first system frame number is used for indicating the first system frame, and the first system frame number is an integer.

As one embodiment, a start moment of the first delay budget and a time length of the first delay budget are used for determining the cut-off moment of the first delay budget.

As one embodiment, the first system frame is a system frame corresponding to the cut-off moment of the first delay budget.

As one embodiment, the first system frame is the system frame to which a subframe corresponding to the cut-off moment of the first delay budget belongs.

As one embodiment, the first system frame is the system frame to which the subframe with a slot corresponding to the cut-off moment of the first delay budget belongs belonging thereto belongs.

As one embodiment, the first moment is later than the sending of the first signaling.

As one embodiment, the first moment depends on the first system frame and a first subframe, a first subframe number is used for indicating the first subframe in the first system frame, and the first subframe number is an integer.

As one embodiment, the first moment depends on the first system frame, the first subframe and a first slot, the first subframe number is used for indicating the first subframe in the first system frame, the first subframe number is an integer, a first slot number is used for indicating the first slot in the first subframe, and the first slot number is an integer.

As one embodiment, the first subframe number is a non-negative integer.

As one embodiment, the first subframe number is an integer not less than 0 and not greater than 10.

As one embodiment, the first slot number is a non-negative integer.

As one embodiment, the first slot number is an integer not less than 0 and not greater than 12.

As one embodiment, the first moment is related to the first system frame.

As one embodiment, the first moment is related to the first subframe.

As one embodiment, the first moment is related to the first slot.

As one embodiment, the first moment is related to the first system frame and the first subframe.

As one embodiment, the first moment is related to the first system frame, the first subframe and the first slot.

As one embodiment, the first moment is the first system frame.

As one embodiment, the first moment is the first subframe in the first system frame.

As one embodiment, the first moment is the first slot in the first subframe in the first system frame.

As one embodiment, the first moment is the first system frame.

As one embodiment, the first moment is the first subframe in the first system frame.

As one embodiment, the first moment is the first slot in the first subframe in the first system frame.

As one embodiment, the first signaling indicates the first system frame.

As one embodiment, the first signaling indicates the first subframe.

As one embodiment, the first signaling indicates the first slot.

As one embodiment, the first signaling indicates the first system frame number.

As one embodiment, the first signaling comprises the first system frame number.

As one embodiment, the first signaling comprises the first system frame number and the first subframe number.

As one embodiment, the first signaling comprises the first system frame number, the first subframe number and the first slot number.

As one embodiment, the first signaling comprises at least parts of bits of the first system frame number.

As one embodiment, the first signaling comprises at least parts of bits of the first system frame number and the first subframe number.

As one embodiment, the first signaling comprises at least parts of the bits of the first system frame number, the first subframe number and the first slot number.

As one embodiment, the first signaling comprises a first system frame field, and the first system frame field indicates the first system frame.

As one sub-embodiment of this embodiment, the first system frame field is set as the first system frame number.

As one sub-embodiment of this embodiment, the first system frame field is set as a value equal to ((the first system frame number) modulo (4)).

As one sub-embodiment of this embodiment, the first system frame field is set as a value equal to ((the first system frame number) modulo (8)).

As one sub-embodiment of this embodiment, the first system frame field occupies 10 bits.

As one sub-embodiment of this embodiment, the first system frame field is set as a binary form of the first system frame number.

As one sub-embodiment of this embodiment, the first system frame field occupies W1 bits, and W1 is a positive integer less than 10.

As one sub-embodiment of this embodiment, the first system frame field is set as the least significant W1 bits of the binary form of the first system frame number, and W1 is a positive integer less than 10.

As one sub-embodiment of this embodiment, W1 is equal to 2.

As one subsidiary embodiment of this sub-embodiment, the candidate values of the first system frame field comprise any one of 00, 01, 10, and 11, and each candidate value indicates one system frame in one 40ms window in one system frame period.

As one sub-embodiment of this embodiment, W1 is equal to 3.

As one subsidiary embodiment of this sub-embodiment, the candidate values of the first system frame field comprise any one of 000, 001, 010, 011, 100, 101, 110, and 111, and each candidate value indicates one system frame in one 80ms window in one system frame period.

As one sub-embodiment of this embodiment, W1 is equal to 4.

As one embodiment, the first signaling comprises a first subframe field, and the first subframe field indicates the first subframe.

As one sub-embodiment of this embodiment, the first subframe field is set as the first subframe number.

As one sub-embodiment of this embodiment, the first subframe field is set as an index of a subframe interval to which the first subframe belongs, and one subframe interval comprises a plurality of consecutive subframes.

As one sub-embodiment of this embodiment, the first subframe field occupies 4 bits.

As one sub-embodiment of this embodiment, the first subframe field occupies 3 bits.

As one sub-embodiment of this embodiment, the first subframe field occupies 5 bits.

As one sub-embodiment of this embodiment, the candidate values of the first subframe field comprise any one of 0000, 0001, 0010, 0011, 0100, 0101, 0110, 0111, 1000, and 1001, and each candidate value indicates one subframe in one system frame.

As one embodiment, the first signaling comprises a first slot field, and the first slot field indicates the first slot.

As one sub-embodiment of this embodiment, the first slot field is set as the first slot number.

As one sub-embodiment of this embodiment, the first slot field is set as an index of a slot interval to which the first slot belongs, and one slot interval comprises a plurality of consecutive slots.

As one sub-embodiment of this embodiment, the first slot field occupies 1 bit.

As one sub-embodiment of this embodiment, the first slot field occupies 2 bits.

As one sub-embodiment of this embodiment, the first slot field occupies 3 bits.

As one sub-embodiment of this embodiment, the first slot field occupies 4 bits.

As one sub-embodiment of this embodiment, the candidate values of the first slot field comprise any one of 0000, 0001, 0010, 0011, 0100, 0101, 0110, 0111, 1000, 1001, 1010, and 1011, and each candidate value indicates one subframe in one system frame.

As one embodiment, the first signaling comprises the first system frame field.

As one embodiment, the first signaling comprises the first system frame field and the first subframe field.

As one embodiment, the first signaling comprises the first system frame field, the first subframe field and the first slot field.

As one embodiment, the first moment depends on the first system frame.

As one embodiment, the first moment field comprises the first system frame field.

As one embodiment, the first moment field comprises the first system frame field and the first subframe field.

As one embodiment, the first moment field comprises the first system frame field, the first subframe field and the first slot field.

As one embodiment, the first moment field consists of the first system frame field.

As one embodiment, the first moment field consists of the first system frame field and the first subframe field.

As one embodiment, the first moment field consists of the first system frame field, the first subframe field and the first slot field.

As one embodiment, the "modulo" refers to a modulo operation.

As one embodiment, the "modulo" refers to %.

As one embodiment, the "modulo" refers to Mod.

As one embodiment, (A1 modulo B1) refers to (A1 Mod B1).

As one embodiment, (A1 modulo B1) means (A1 % B1).

As one embodiment, (A1 modulo B1) means modulo B1 by A1.

As one embodiment, (A1 modulo B1) is the remainder of A1 divided by B1.

### Embodiment 8

Embodiment 8 illustrates a schematic diagram in which first signaling indicates a first time length according to one embodiment of the present application.

In Embodiment 8, the first signaling indicates the first time length, and a second moment and the first time length are used for determining a first delay budget; and at least one of the second moment or the first time length depends on the first system frame.

As one embodiment, the first signaling indicates a plurality of time lengths, and the first time length is one time length of the plurality of time lengths.

As one embodiment, the first signaling indicates only one time length, and the only time length is the first time length.

As one embodiment, the first signaling indicates the second moment and the first time length.

As one embodiment, the first signaling indicates the first time length, and the first signaling does not indicate the second moment.

As one embodiment, the phrase of the first signaling indicating the first time length comprises: the first signaling explicitly indicates the first time length.

As one embodiment, the phrase of the first signaling indicating the first time length comprises: the first signaling implicitly indicates the first time length.

As one embodiment, the phrase of the first signaling indicating the first time length comprises: the first signaling indicates a time interval to which the first time length belongs.

As one embodiment, the phrase of the first signaling indicating the first time length comprises: the first signaling comprises the first time length.

As one embodiment, the phrase of the first signaling indicating the first time length comprises: the first signaling comprises an index of the first time length.

As one embodiment, the phrase of the first signaling indicating the first time length comprises: the first signaling indicates an index of the time interval to which the first time length belongs.

As one embodiment, the phrase of the first signaling indicating the first time length comprises: the first signaling is set as the first time length.

As one embodiment, the phrase of the first signaling indicating the first time length comprises: the first signaling is set as the index of the first time length.

As one embodiment, the phrase of the first signaling indicating the first time length comprises: the first signaling comprises a first time length field, and the first time length field is set as the first time length.

As one embodiment, the first time length is a value of the first time length field.

As one embodiment, the first time length is determined by a MAC sub-layer.

As one embodiment, the first time length is determined by a higher layer of the MAC sub-layer.

As one embodiment, the first time length is indicated to the MAC sub-layer by the higher layer of the MAC sub-layer.

As one embodiment, the first time length comprises a positive integer number of milliseconds.

As one embodiment, the first time length comprises a positive integer number of slots.

As one embodiment, the first time length comprises a positive integer number of subframes.

As one embodiment, the first time length comprises a positive integer number of half frames.

As one embodiment, the first time length comprises a positive integer number of system frames.

As one embodiment, the first time length comprises a positive integer number of radio frames.

As one embodiment, the first time length is the time length of the first delay budget.

As one embodiment, the first time length is equal to the time length of the first delay budget.

As one embodiment, the first time length is the time length of the deviation of the first delay budget.

As one embodiment, the first time length is one positive number; and the second moment is earlier than a cut-off moment of the first delay budget.

As one embodiment, the first time length is one negative number; and the second moment is later than the cut-off moment of the first delay budget.

As one embodiment, the first time length is one positive number or one negative number, and one field in the first signaling indicates whether the first time length is one positive number or one negative number.

As one embodiment, the second moment is one absolute moment.

As one embodiment, the second moment is one reference moment.

As one embodiment, the second moment is not later than a start moment of the first delay budget.

As one embodiment, the second moment is later than the start moment of the first delay budget.

As one embodiment, the second moment is predefined.

As one embodiment, the second moment is configured by an RRC message.

As one embodiment, the second moment is determined by the coordination between the first node and the second node.

As one embodiment, the second moment is the start moment of the first delay budget.

As one embodiment, the second moment is one moment before the start moment of the first delay budget.

As one embodiment, the second moment is one moment after the cut-off moment of the first delay budget.

As one embodiment, the second moment is one moment after the start moment and before the cut-off moment of the first delay budget.

As one embodiment, the second moment and the first time length are used for determining the cut-off moment of the first delay budget.

As one embodiment, the moment passing the first time length since the second moment is the cut-off moment of the first delay budget.

As one embodiment, the moment determined by the sum of the second moment and the first time length is the cut-off moment of the first delay budget.

As one embodiment, the moment determined by the sum of the second moment and the first time length and one deviation is the cut-off moment of the first delay budget.

As one embodiment, the moment when the second moment increases by the first time length is the cut-off moment of the first delay budget.

As one embodiment, the moment when the second moment increases by the sum of the first time length and one deviation is the cut-off moment of the first delay budget.

As one embodiment, the second moment is the moment when the first delay budget is determined.

As one embodiment, the start moment of the first delay budget comprises: the current moment.

As one embodiment, the start moment of the first delay budget comprises: the moment when the first signaling is set.

As one embodiment, the start moment of the first delay budget comprises: the moment when the second moment field in the first signaling is set.

As one embodiment, the start moment of the first delay budget comprises: the moment when the first time length field in the first signaling is set.

As one embodiment, the start moment of the first delay budget comprises: the moment when the first moment field in the first signaling is set.

As one embodiment, the start moment of the first delay budget comprises: the moment when the MAC PDU carrying the first signaling is assembled.

As one embodiment, the start moment of the first delay budget comprises: the moment when the field for indicating the first time length in the first signaling is set.

As one embodiment, the start moment of the first delay budget comprises: the moment when the field for indicating the second moment in the first signaling is set.

As one embodiment, at least one of the second moment or the first time length depending on the first system frame is used for determining that the first delay budget depends on the first system frame.

As one embodiment, the second moment depends on the first system frame, and the first time length does not depend on the first system frame.

As one embodiment, the second moment does not depend on the first system frame, and the first time length depends on the first system frame.

As one embodiment, the second moment and the first time length both depend on the first system frame.

As one embodiment, the first time length depends on the first system frame.

As one embodiment, the second moment depends on the first system frame.

As one sub-embodiment of this embodiment, the second moment depends on the first system frame and a first subframe, a first subframe number is used for indicating the first subframe in the first system frame, and the first subframe number is an integer.

As one sub-embodiment of this embodiment, the second moment depends on the first system frame, the first subframe and a first slot, the first subframe number is used for indicating the first subframe in the first system frame, the first subframe number is an integer, a first slot number is used for indicating the first slot in the first subframe, and the first slot number is an integer.

As one sub-embodiment of this embodiment, the second moment does not depend on the first subframe.

As one sub-embodiment of this embodiment, the second moment does not depend on the first slot.

As one sub-embodiment of this embodiment, the system frame corresponding to the second moment is the first system frame.

As one sub-embodiment of this embodiment, the second moment is related to the first system frame.

As one sub-embodiment of this embodiment, the second moment is related to the first subframe.

As one sub-embodiment of this embodiment, the second moment is related to the first slot.

As one sub-embodiment of this embodiment, the second moment is related to the first system frame and the first subframe.

As one sub-embodiment of this embodiment, the second moment is related to the first system frame, the first subframe and the first slot.

As one sub-embodiment of this embodiment, the second moment is the first system frame.

As one sub-embodiment of this embodiment, the second moment is the first subframe in the first system frame.

As one sub-embodiment of this embodiment, the second moment is the first slot in the first subframe in the first system frame.

As one sub-embodiment of this embodiment, the second moment is the first system frame.

As one sub-embodiment of this embodiment, the second moment is the first subframe in the first system frame.

As one sub-embodiment of this embodiment, the second moment is the first slot in the first subframe in the first system frame.

As one sub-embodiment of this embodiment, the first signaling comprises a first system frame field.

As one sub-embodiment of this embodiment, the first signaling comprises the first system frame field and a first subframe field.

As one sub-embodiment of this embodiment, the first signaling comprises the first system frame field, the first subframe field and a first slot field.

As one sub-embodiment of this embodiment, the second moment field comprises the first system frame field.

As one sub-embodiment of this embodiment, the second moment field comprises the first system frame field and the first subframe field.

As one sub-embodiment of this embodiment, the second moment field comprises the first system frame field, the first subframe field and the first slot field.

As one sub-embodiment of this embodiment, the second moment field consists of the first system frame field.

As one sub-embodiment of this embodiment, the second moment field consists of the first system frame field and the first subframe field.

As one sub-embodiment of this embodiment, the second moment field consists of the first system frame field, the first subframe field and the first slot field.

### Embodiment 9

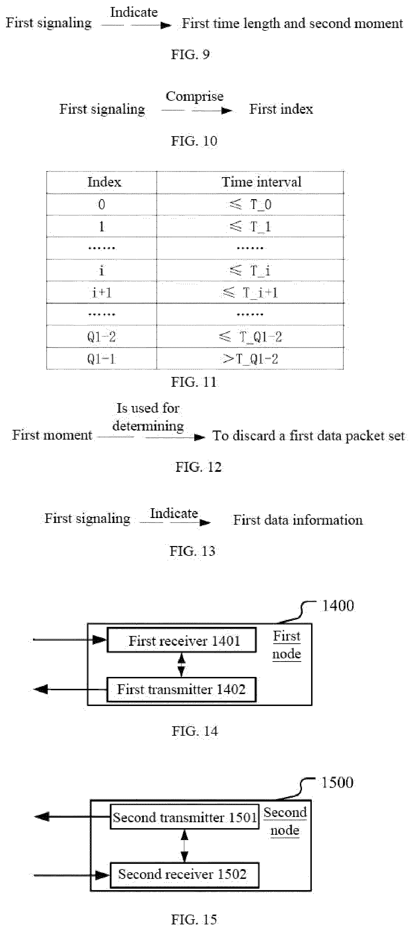

Embodiment 9 illustrates a schematic diagram in which first signaling indicates a first time length and a second moment according to one embodiment of the present application, as shown in FIG. 9.

In Embodiment 9, the first signaling indicates the first time length, and a second moment and the first time length are used for determining a first delay budget; and at least one of the second moment or the first time length depends on a first system frame; and the first signaling indicates the second moment.

As one embodiment, the first signaling indicates the first time length and the second moment.

As one embodiment, the same MAC subPDU in the first signaling indicates the first time length and the second moment.

As one embodiment, the same MAC SDU in the first signaling indicates the first time length and the second moment.

As one embodiment, the same MAC CE in the first signaling indicates the first time length and the second moment.

As one embodiment, the same RRC message in the first signaling indicates the first time length and the second moment.

As one embodiment, the same RRC IE in the first signaling indicates the first time length and the second moment.

As one embodiment, one field in the first signaling indicates the first time length, and another field in the first signaling indicates the second moment.

As one embodiment, the first signaling indicates a plurality of moments, and the second moment is one moment of the plurality of moments.

As one embodiment, the first signaling indicates only one moment, and the only one moment is the second moment.

As one embodiment, the phrase of the first signaling indicating the second moment comprises: the first signaling comprises the second moment.

As one embodiment, the phrase of the first signaling indicating the second moment comprises: the first signaling comprises a second moment field, and the second moment field indicates the second moment.

As one embodiment, the phrase of the first signaling indicating the second moment comprises: the first signaling comprises the second moment field, and the second moment field is set as the second moment.

As one embodiment, the phrase of the first signaling indicating the second moment comprises: the first signaling comprises the second moment field, and the second moment field is set as an index of the second moment.

As one embodiment, the phrase of the first signaling indicating the second moment comprises: the first signaling explicitly indicates the second moment.

As one embodiment, the phrase of the first signaling indicating the second moment comprises: the first signaling implicitly indicates the second moment.

As one embodiment, the phrase of the first signaling indicating the second moment comprises: the first signaling is set as the second moment.

As one embodiment, the second moment is the start moment of the first delay budget.

As one embodiment, the second moment is not earlier than the sending of the first signaling.

As one embodiment, the second moment is determined by a MAC sub-layer.

As one embodiment, the second moment is determined by a higher layer of the MAC sub-layer.

As one embodiment, the second moment is indicated to the MAC sub-layer by the higher layer of the MAC sub-layer.

### Embodiment 10

Embodiment 10 illustrates a schematic diagram in which first signaling comprises a first index according to one embodiment of the present application, as shown in FIG. 10.

In Embodiment 10, the first signaling comprises a first index, and the first index corresponds to a first time interval.

As one embodiment, the phrase of the first signaling comprising a first index comprises: the first signaling explicitly indicates the first index.

As one embodiment, the phrase of the first signaling comprising a first index comprises: the first signaling implicitly indicates the first index.

As one embodiment, the phrase of the first signaling comprising a first index comprises: the first signaling comprises the first index.

As one embodiment, the phrase of the first signaling comprising a first index comprises: one field in the first signaling is set as the first index.

As one embodiment, the phrase of the first signaling comprising a first index comprises: the first signaling is set as the first index.

As one embodiment, the first index is used for determining the first time interval.

As one embodiment, the first index indicates the first time interval.

As one embodiment, the first index is an index of the first time interval.

As one embodiment, the first index indicates the first time interval among a plurality time intervals.

As one embodiment, the first index corresponding to the first time interval is defined.

As one embodiment, the first index corresponding to the first time interval is preconfigured.

As one embodiment, the first index is one non-negative integer.

As one embodiment, the first index is one positive integer.

As one embodiment, one RRC message is used for determining that the first index corresponds to the first time interval.

As one embodiment, one RRC IE is used for determining that the first index corresponds to the first time interval.

As one embodiment, one RRC field is used for determining that the first index corresponds to the first time interval.

As one embodiment, one table is used for determining that the first index corresponds to the first time interval.

As one embodiment, the first time interval comprises at least one moment.

As one embodiment, the first time interval comprises at least 1 slot.

As one embodiment, the first time interval comprises at least 1 subframe.

As one embodiment, the first time interval comprises at least 1 half frame.

As one embodiment, the first time interval comprises at least 1 millisecond.

As one embodiment, the first time interval comprises at least one SFN.

As one embodiment, the first moment is one moment in the first time interval.

As one embodiment, the first time interval comprises the first moment; and the first signaling indicates the first moment.

As one sub-embodiment of this embodiment, the first signaling comprises the first index, the first index corresponds to the first time interval, and the first time interval comprises the first moment; and the first signaling indicates the first moment.

As one sub-embodiment of this embodiment, the first moment belongs to the first time interval.

As one sub-embodiment of this embodiment, the first moment belonging to the first time interval is used for determining that the first signaling comprises the first index.

As one sub-embodiment of this embodiment, any value belonging to the first time interval corresponds to one moment in the moment field.

As one sub-embodiment of this embodiment, the first time interval is a period of time in a time domain.

As one sub-embodiment of this embodiment, the first time interval is a continuous period of time in the time domain.

As one sub-embodiment of this embodiment, the first moment is one moment in the first time interval.

As one embodiment, the first time interval comprises the first time length; and the first delay budget depends on at least the first system frame.

As one sub-embodiment of this embodiment, the first signaling comprises the first index, the first index corresponds to the first time interval, and the first time interval comprises the first time length; and the first delay budget depends on at least the first system frame.

As one sub-embodiment of this embodiment, the first delay budget belongs to the first time interval.

As one sub-embodiment of this embodiment, the first delay budget belonging to the first time interval is used for determining that the first signaling comprises the first index.

As one sub-embodiment of this embodiment, any value belonging to the first time interval corresponds to one time length.

As one sub-embodiment of this embodiment, the first time interval is a range of one time length.

As one sub-embodiment of this embodiment, the first time length is one time length.

As one sub-embodiment of this embodiment, the first time length is greater than the minimum value of the first time interval, and the first time length is not greater than the maximum value of the first time interval.

As one sub-embodiment of this embodiment, the first time length is not greater than the maximum value of the first time interval.

### Embodiment 11

Embodiment 11 illustrates a schematic diagram of a first table according to one embodiment of the present application, as shown in FIG. 11. In FIG. 11, the first column of the first table comprises the indexes of Q1 time intervals, and the second column of the first table comprises Q1 time intervals; and it is particularly explained that this example does not limit the size of the first table, and this example does not limit the implementation of the Q1 time intervals.

In Embodiment 11, the first table is used for determining a first index; the first table comprises Q1 indexes and at most Q1 time intervals, the Q1 is a positive integer, and the Q1 is greater than 1; each time interval of the at most Q1 time intervals corresponds to one index of the Q1 indexes, and indexes corresponding to any two time intervals of the at most Q1 time intervals are different; and the first index is one index of the Q1 indexes, and the first time interval is one time interval of the Q1 time intervals.

As one embodiment, the first index is determined by looking up a table.

As one embodiment, the first table is used for determining that the first index indicates the first time interval.

As one embodiment, the first table is used for determining that the first index corresponds to the first time interval.

As one embodiment, the first time interval is the time interval to which the first moment belongs, and the first index is an index of the first time interval.

As one embodiment, the first time interval comprises the first moment; and the first signaling indicates the first moment.

As one embodiment, the first index is determined according to the index corresponding to the time interval to which the first moment belongs.

As one embodiment, the first time interval to which the first moment belongs corresponding to the first index is used for determining the first index.

As one embodiment, the first time interval is the time interval to which the first time length belongs, and the first index is the index of the first time interval.

As one embodiment, the first time interval comprises the first time length; and the first delay budget depends on at least the first system frame.

As one embodiment, the first index is determined according to the index corresponding to the time interval to which the first time length belongs.

As one embodiment, the first time interval to which the first time length belongs corresponding to the first index is used for determining the first index.

As one embodiment, the first table is predefined.

As one embodiment, the maximum Q1 time intervals are Q1 time intervals; and each index in the first table is not reserved.

As one embodiment, the maximum Q1 time intervals are less than Q1 time intervals; and at least one index in the first table is reserved.

As one embodiment, the maximum Q1 time intervals are K3 time intervals, and the K3 is less than the Q1; and (Q1-K3) indexes in the first table are reserved.

As one embodiment, the Q1 is equal to K3.

As one embodiment, the Q1 is greater than K3.

As one embodiment, the Q1 is less than K3.

As one embodiment, the Q1 is equal to 8.

As one embodiment, the Q1 is equal to 16.

As one embodiment, the Q1 is equal to 32.

As one embodiment, the Q1 is equal to 64.

As one embodiment, an index #0 in the first table is reserved.

As one embodiment, an index #Q1-1 in the first table is reserved.

As one embodiment, the index #Q1-1 and an index #Q1-2 in the first table are reserved.

As one embodiment, each time interval of the maximum Q1 time intervals is indicated by one index of the Q1 indexes.

As one embodiment, each time interval of the maximum Q1 time intervals is uniquely indicated by one index of the Q1 indexes.

As one embodiment, each time interval of the maximum Q1 time intervals corresponds to the maximum Q1 of the Q1 indexes in a one-to-one manner.

As one embodiment, each time interval of the Q1 time intervals corresponds to the Q1 indexes in a one-to-one manner.

As one embodiment, each time interval of the K3 time intervals corresponds to the K3 of the Q1 indexes in a one-to-one manner.

As one embodiment, in the first table, the time interval corresponding to the index #0 ≤T_0, the time interval corresponding to an index #1 ≤T_1...the time interval corresponding to an index #i ≤T_i, the time interval corresponding to an index #i+1 ≤T_i+1...the time interval corresponding to the index #Q1-2 ≤T_Q1-2, and the time interval corresponding to the index #Q1-1 >T_Q1-2.

As one embodiment, in the first table, the time interval corresponding to the index #0 ≤T_0, T_0 < the time interval corresponding to the index #1 ≤T_1...T_i-1 < the time interval corresponding to the index #i ≤T_i, T_i < the time interval corresponding to the index #i+1 ≤T_i+1...T_Q1-3 < the time interval corresponding to the index #Q1-2 ≤T_Q1-2, and the time interval corresponding to the index #Q1-1 >T_Q1-2.

As one embodiment, T_0 < T_1... < T_i < T_i+1... < T_Q1-2.

As one embodiment, in the first table, the time interval corresponding to the index #0 ≤T_0, the time interval corresponding to an index #1 ≤T_1...the time interval corresponding to an index #i ≤T_i, the time interval corresponding to an index #i+1 ≤T_i+1. the time interval corresponding to the index #K3-2 ≤T_K3-2, and the time interval corresponding to the index #K3-1 >T_K3-2.

As one embodiment, in the first table, the time interval corresponding to the index #0 ≤T_0, T_0 < the time interval corresponding to the index #1 ≤T_1...T_i-1 < the time interval corresponding to the index #i ≤T_i, T_i < the time interval corresponding to the index #i+1 ≤T_i+1...T_K3-3 < the time interval corresponding to an index #K3-2 ≤T_ K3-2, and the time interval corresponding to an index #K3-1 >T_ K3-2.

As one embodiment, T_0 < T_1... < T_i < T_i+1... < T_ K3-2.

As one embodiment, the first index is one integer not less than 0 and not greater than Q1-1.

As one embodiment, the first index is one integer not less than 0 and not greater than K3-1.

As one embodiment, the first index is one integer not less than 1 and not greater than Q1-1.

As one embodiment, the first index is one integer not less than 1 and not greater than K3.

### Embodiment 12

Embodiment 12 illustrates a schematic diagram in which a first moment is used for determining to discard a first data packet set according to one embodiment of the present application, as shown in FIG. 12.

In Embodiment 12, a cut-off moment of a first delay budget is used for determining to discard the first data packet set.

As one embodiment, in response to a first node receiving one indication at a higher layer, the first data packet set is discarded.

As one embodiment, the behavior of discarding the first data packet set comprises: discarding each data packet in the first data packet set.

As one embodiment, the behavior of discarding the first data packet set comprises: discarding at least one data packet in the first data packet set.

As one embodiment, the behavior of discarding the first data packet set comprises: discarding a buffered data packet in the first data packet set.

As one embodiment, the behavior of discarding the first data packet set comprises: discarding an unsent data packet in the first data packet set.

As one embodiment, at a cut-off moment of a first delay budget, the first node discards the first data packet set.

As one embodiment, at the cut-off moment of the first delay budget, at least one protocol entity of the first node discards the first data packet set.

As one embodiment, at the cut-off moment of the first delay budget, at least one protocol layer of the first node discards the first data packet set.

As one embodiment, at the cut-off moment of the first delay budget, the protocol entity to which the first data packet set in the first node belongs discards the first data packet set.

As one embodiment, the cut-off moment of the first delay budget comprises: when a first timer expires.

As one embodiment, the cut-off moment of the first delay budget comprises: when the first node receives the one indication at the higher layer.

As one embodiment, the cut-off moment of the first delay budget comprises: when the first node receives the one indication at a lower layer.

As one embodiment, the first data packet set is discarded at a higher layer of an SDAP sub-layer.

As one embodiment, the first data packet set is discarded at the SDAP sub-layer.

As one embodiment, the first data packet set is discarded at the PDCP sub-layer.

As one embodiment, the first data packet set is discarded at the RLC sub-layer.

As one embodiment, the first data packet set is discarded at a higher layer of a MAC sub-layer.

### Embodiment 13

Embodiment 13 illustrates a schematic diagram in which first signaling indicates first data information according to one embodiment of the present application, as shown in FIG. 13.

In Embodiment 13, the first signaling indicates the first data information, and the first data information comprises a data volume of at least one data packet in a first data packet set.

As one embodiment, a value of a field used for indicating the first data information and a value of a field used for indicating a second moment are simultaneously set.

As one embodiment, the moment when the value of the field used for indicating the first data information is set is earlier than the moment when the value of the field used for indicating the second moment is set.

As one embodiment, the moment when the value of the field used for indicating the first data information is set is later than the moment when the value of the field used for indicating the second moment is set.

As one embodiment, the first data information and the first time length are simultaneously set.

As one embodiment, the first data information comprises a data volume of each data packet in the first data packet set.

As one embodiment, the first data information does not comprise a data volume of at least one data packet in the first data packet set.

As one embodiment, the first data information is a data volume of at least one data packet set, and the first data packet set is one data packet set of the at least one data packet set.

As one embodiment, the first data information is a data volume of only the first data packet set.

As one embodiment, the first data information is a data volume of a logical channel group to which the first data packet set belongs.

As one embodiment, the first data information is a data volume of the logical channel to which the first data packet set belongs.

As one embodiment, the first data information is a data volume of a radio bearer to which the first data packet set belongs.

As one embodiment, the data volume refers to a buffered data volume.

As one embodiment, the data volume refers to an expected data volume.

As one embodiment, the data volume refers to a data volume to be processed.

As one embodiment, the first signaling indicates K1 pieces of data information, and a first data volume information is one piece of data volume information of the K1 pieces of data volume information.

As one embodiment, the first signaling indicates the K1 pieces of data information and K1 moments; and the K1 pieces of data volume information correspond to the K1 moments, respectively.

As one embodiment, the first signaling indicates the K1 pieces of data information and K1 time lengths; and the K1 pieces of data volume information correspond to the K1 time lengths, respectively.

As one embodiment, the first signaling indicates the K1 pieces of data information and only one moment, and the only one moment is the first moment.

As one embodiment, the first signaling indicates the K1 pieces of data information and only one moment, and the only one moment is the second moment.

As one sub-embodiment of this embodiment, the second moment is one moment of the K1 moments; and the K1 pieces of data volume information correspond to the K1 moments, respectively.

As one sub-embodiment of this embodiment, the second moment is the latest one moment of the K1 moments; and the K1 pieces of data volume information correspond to the K1 moments, respectively.

As one sub-embodiment of this embodiment, the second moment is the earliest one moment of the K1 moments; and the K1 pieces of data volume information correspond to the K1 moments, respectively.

As one embodiment, the first signaling indicates the K1 pieces of data information and only one time length, and the only one time length is the first time length.

As one sub-embodiment of this embodiment, the first time length is one time length of the K1 time lengths; and the K1 pieces of data volume information correspond to the K1 time lengths, respectively.

As one sub-embodiment of this embodiment, the first time length is the latest time length in the K1 moments; and the K1 pieces of data volume information correspond to the K1 time lengths, respectively.

As one sub-embodiment of this embodiment, the first time length is the earliest time length in the K1 moments; and the K1 pieces of data volume information correspond to the K1 time lengths, respectively.

### Embodiment 14

Embodiment 14 illustrates a structural block diagram of a processing device used in a first node according to one embodiment of the present application, as shown in FIG. 14. In FIG. 14, the processing device 1400 in the first node comprises a first receiver 1401 and a first transmitter 1402.

The first transmitter 1402 sends first signaling, the first signaling being used for determining a first delay budget and the first delay budget depending on at least a first system frame; or

the first transmitter 1402 sends the first signaling, the first signaling indicating a first moment and the first moment being a cut-off moment of the first delay budget;

in Embodiment 14, the first delay budget is a delay budget of a first data packet set; the first data packet set comprises at least one data packet, and each data packet in the first data packet set is a data packet on a MAC sub-layer; and a first system frame number is used for indicating the first system frame, and the first system frame number is an integer.

As one embodiment, the first receiver 1401 receives a first message, the first message indicating a delay budget of a data packet of a first radio bearer; wherein the first data packet set belongs to the first radio bearer; and receiving time of the first data packet set and the delay budget of the data packet of the first radio bearer are jointly used for determining the first moment.

As one embodiment, the first signaling indicates the first moment, and the first moment depends on at least the first system frame.

As one embodiment, the first signaling comprises a first index, the first index corresponds to a first time interval, and the first time interval comprises the first moment; and the first signaling indicates the first moment.

As one embodiment, a first table is used for determining the first index; the first table comprises Q1 indexes and at most Q1 time intervals, the Q1 is a positive integer, and the Q1 is greater than 1; each time interval of the at most Q1 time intervals corresponds to one index of the Q1 indexes, and indexes corresponding to any two time intervals of the at most Q1 time intervals are different; and the first index is one index of the Q1 indexes, and the first time interval is one time interval of the Q1 time intervals.

As one embodiment, the first signaling indicates a first time length, and a second moment and the first time length are used for determining the first delay budget; and at least one of the second moment or the first time length depends on the first system frame.

As one embodiment, the first signaling indicates the second moment.

As one embodiment, the first signaling comprises a first index, the first index corresponds to the first time interval, and the first time interval comprises the first time length; and the first delay budget depends on at least the first system frame.

As one embodiment, a first table is used for determining the first index; the first table comprises Q1 indexes and at most Q1 time intervals, the Q1 is a positive integer, and the Q1 is greater than 1; each time interval of the at most Q1 time intervals corresponds to one index of the Q1 indexes, and indexes corresponding to any two time intervals of the at most Q1 time intervals are different; and the first index is one index of the Q1 indexes, and the first time interval is one time interval of the Q1 time intervals.

As one embodiment, the cut-off moment of the first delay budget is used for determining to discard the first data packet set.

As one embodiment, the first signaling indicates first data information, and the first data information comprises a data volume of at least one data packet in the first data packet set.

As one embodiment, the first receiver 1401 receives target signaling, and the target signaling is used for determining a first uplink grant; and wherein the first signaling triggers the target signaling.

As one embodiment, the first receiver 1401 comprises the antenna 452, the receiving device 454, the multi-antenna receiving processor 458, the receiving processor 456, the controller/processor 459, the memory 460 and the data source 467 in FIG. 4 of the present application.

As one embodiment, the first receiver 1401 comprises the antenna 452, the receiving device 454, the multi-antenna receiving processor 458, and the receiving processor 456 in FIG. 4 of the present application.

As one embodiment, the first receiver 1401 comprises the antenna 452, the receiving device 454, and the receiving processor 456 in FIG. 4 of the present application.

As one embodiment, the first transmitter 1402 comprises the antenna 452, the transmitting device 454, the multi-antenna transmitting processor 457, the transmitting processor 468, the controller/processor 459, the memory 460, and the data source 467 in FIG. 4 of the present application.

As one embodiment, the first transmitter 1402 comprises the antenna 452, the transmitting device 454, the multi-antenna transmitting processor 457, and the transmitting processor 468 in FIG. 4 of the present application.

As one embodiment, the first transmitter 1402 comprises the antenna 452, the transmitting device 454, and the transmitting processor 468 in FIG. 4 of the present application.

### Embodiment 15

Embodiment 15 illustrates a structural block diagram of a processing device used in a second node according to one embodiment of the present application, as shown in FIG. 15. In FIG. 15, the processing device 1500 in the second node comprises a second transmitter 1501 and a second receiver 1502.

The second receiver 1502 receives first signaling, the first signaling being used for determining a first delay budget and the first delay budget depending on at least the first system frame; or
the second receiver 1502 receives the first signaling, the first signaling indicating a first moment and the first moment being a cut-off moment of the first delay budget;
in Embodiment 15, the first delay budget is a delay budget of a first data packet set; the first data packet set comprises at least one data packet, and each data packet in the first data packet set is a data packet on a MAC sub-layer; and a first system frame number is used for indicating the first system frame, and the first system frame number is an integer.

As one embodiment, the second transmitter 1501 sends a first message, the first message indicating a delay budget of a data packet of a first radio bearer, wherein the first data packet set belongs to the first radio bearer; and receiving time of the first data packet set and the delay budget of the data packet of the first radio bearer are jointly used for determining the first moment.

As one embodiment, the first signaling indicates the first moment, and the first moment depends on at least the first system frame.

As one embodiment, the first signaling comprises a first index, the first index corresponds to a first time interval, and the first time interval comprises the first moment; and the first signaling indicates the first moment.

As one embodiment, a first table is used for determining the first index; the first table comprises Q1 indexes and at most Q1 time intervals, the Q1 is a positive integer, and the Q1 is greater than 1; each time interval of the at most Q1 time intervals corresponds to one index of the Q1 indexes, and indexes corresponding to any two time intervals of the at most Q1 time intervals are different; and the first index is one index of the Q1 indexes, and the first time interval is one time interval of the Q1 time intervals.

As one embodiment, the first signaling indicates a first time length, and a second moment and the first time length are used for determining the first delay budget; and at least one of the second moment or the first time length depends on the first system frame.

As one embodiment, the first signaling indicates the second moment.

As one embodiment, the first signaling comprises a first index, the first index corresponds to the first time interval, and the first time interval comprises the first time length; and the first delay budget depends on at least the first system frame.

As one embodiment, a first table is used for determining the first index; the first table comprises Q1 indexes and at most Q1 time intervals, the Q1 is a positive integer, and the Q1 is greater than 1; each time interval of the at most Q1 time intervals corresponds to one index of the Q1 indexes, and indexes corresponding to any two time intervals of the at most Q1 time intervals are different; and the first index is one index of the Q1 indexes, and the first time interval is one time interval of the Q1 time intervals.

As one embodiment, the cut-off moment of the first delay budget is used for determining to discard the first data packet set.

As one embodiment, the first signaling indicates first data information, and the first data information comprises a data volume of at least one data packet in the first data packet set.

As one embodiment, the second transmitter 1501 sends target signaling, the target signaling being used for determining a first uplink grant, wherein the first signaling triggers the target signaling.

As one embodiment, the second transmitter 1501 comprises the antenna 420, the transmitting device 418, the multi-antenna transmitting processor 471, the transmitting processor 416, the controller/processor 475, and the memory 476 in FIG. 4 of the present application.

As one embodiment, the second transmitter 1501 comprises the antenna 420, the transmitting device 418, the multi-antenna transmitting processor 471, and the transmitting processor 416 in FIG. 4 of the present application.

As one embodiment, the second transmitter 1501 comprises the antenna 420, the transmitting device 418, and the transmitting processor 416 in FIG. 4 of the present application.

As one embodiment, the second receiver 1502 comprises the antenna 420, the receiver 418, the multi-antenna receiving processor 472, the receiving processor 470, the controller/processor 475, and the memory 476 in FIG. 4 of the present application.

As one embodiment, the second receiver 1502 comprises the antenna 420, the receiving device 418, the multi-antenna receiving processor 472, and the receiving processor 470 in FIG. 4 of the present application.

As one embodiment, the second receiver 1502 comprises the antenna 420, the receiving device 418, and the receiving processor 470 in FIG. 4 of the present application.

### Embodiment 16

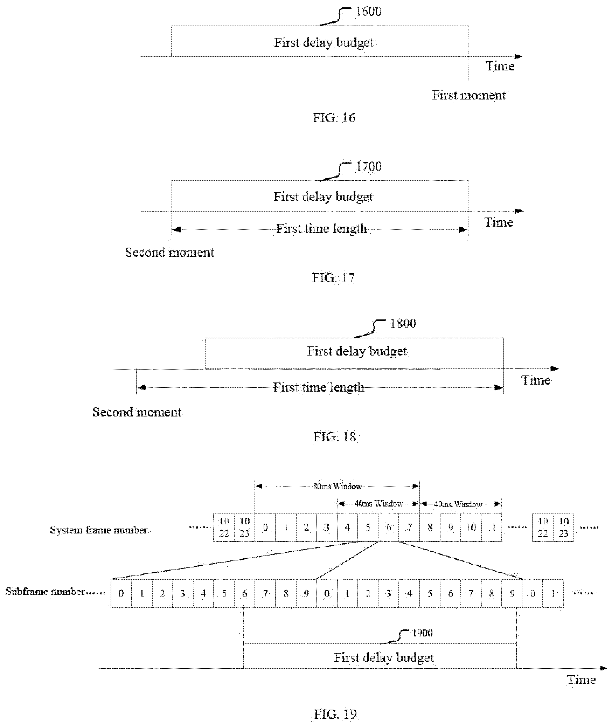

Embodiment 16 illustrates a schematic diagram of a first moment according to one embodiment of the present application, as shown in FIG. 16. In FIG. 16, the horizontal axis represents time, and a block 1600 represents a corresponding relationship of a first delay budget in a time domain.

As one embodiment, the first moment is a cut-off moment of the first delay budget.

As one embodiment, the first moment is a cut-off moment of a deviation of the first delay budget.

As one embodiment, this example does not limit the deviation of the first moment in the present application from the cut-off moment of the first delay budget.

### Embodiment 17

Embodiment 17 illustrates a schematic diagram of a second moment and a first time length according to one embodiment of the present application, as shown in FIG. 17. In FIG. 17, the horizontal axis represents time, and a block 1700 represents a corresponding relationship of a first delay budget in a time domain.

As one embodiment, the second moment is a start moment of the first delay budget.

As one embodiment, the second moment is a start moment of a deviation of the first delay budget.

As one embodiment, the first time length is the first delay budget.

As one embodiment, the first time length is the deviation of the first delay budget.

As one embodiment, the first time length is greater than the first delay budget.

As one embodiment, the first time length is less than the first delay budget.

As one embodiment, this example does not limit the deviation of the second moment in the present application from the start moment of the first delay budget.

As one embodiment, this example does not limit the deviation of the first time length in the present application from the first delay budget.

### Embodiment 18

Embodiment 18 illustrates a schematic diagram of a second moment and a first time length according to another embodiment of the present application, as shown in FIG. 18. In FIG. 18, the horizontal axis represents time, a block 1800 represents a corresponding relationship of a first delay budget in a time domain, and the second moment is one reference moment.

As one embodiment, the moment passing the first time length since the second moment is a cut-off moment of the first delay budget.

As one embodiment, the moment passing the first time length before the second moment is the cut-off moment of the first delay budget.

As one embodiment, the second moment is earlier than a start moment of the first delay budget.

As one embodiment, the second moment is later than the start moment of the first delay budget.

As one embodiment, the second moment is earlier than the cut-off moment of the first delay budget.

As one embodiment, the second moment is later than the cut-off moment of the first delay budget.

As one embodiment, this example does not limit a size relationship between the first time length and the first delay budget in the present application.

As one embodiment, this example does not limit an order relationship between the second moment and the start moment of the first delay budget in the present application.

As one embodiment, this example does not limit an order relationship between the second moment and the cut-off moment of the first delay budget in the present application.

### Embodiment 19

Embodiment 19 illustrates a schematic diagram in which a first delay budget depends on a first system frame according to one embodiment of the present application, as shown in FIG. 19. In FIG. 19, the horizontal axis represents time, and a block 1900 represents a corresponding relationship of the first delay budget in a time domain; each block corresponding to a system frame number represents one system frame, and the number in the block represents the system frame number; each block corresponding to a subframe number represents one subframe, and the number in the block represents the subframe number; one system frame number period is 1024, the system frame numbers in each system frame number period are ordered from 0 to 1023, the system frame corresponding to each system frame number comprises 10 subframes, and the subframe numbers in each system frame are ordered from 0 to 9; the system frame number corresponding to a start moment of the first delay budget is 5, and the subframe number corresponding to the start time of the first delay budget is 6; and the system frame number corresponding to a cut-off moment of the first delay budget is 6, and the subframe number corresponding to the cut-off moment of the first delay budget is 9.

As one embodiment, first signaling comprises a first system frame field, and the first system frame field indicates the first system frame. and the first signaling comprises a first subframe field, and the first subframe field indicates a first subframe.

As one sub-embodiment of this embodiment, the first system frame is a system frame corresponding to the cut-off moment of the first delay budget, and a system frame number of the first system frame is 6 (corresponding to binary 0000000110).

As one subsidiary embodiment of this sub-embodiment, the first system frame field is set as 10, and the first sub-frame field is set as 1001; the first system frame field is set as a value equal to ((a first system frame number) modulo (4)); and the first sub-frame field occupies 4 bits.

As one subsidiary embodiment of this sub-embodiment, the first system frame field is set as 110, and the first sub-frame field is set as 1001; the first system frame field is set as a value equal to ((a first system frame number) modulo (8)); and the first sub-frame field occupies 4 bits.

As one subsidiary embodiment of this sub-embodiment, the first system frame field is set as 0000000110, and the first sub-frame field is set as 1001; the first system frame field is set as the first system frame number; and the first sub-frame field occupies 4 bits.

As one sub-embodiment of this embodiment, the first system frame is a system frame corresponding to the start moment of the first delay budget, and the first system frame number is 5 (corresponding to binary 0000000101).

As one subsidiary embodiment of this sub-embodiment, the first system frame field is set as 01, and the first sub-frame field is set as 0110; the first system frame field is set as a value equal to ((a first system frame number) modulo (4)); and the first sub-frame field occupies 4 bits.

As one subsidiary embodiment of this sub-embodiment, the first system frame field is set as 101, and the first sub-frame field is set as 0110; the first system frame field is set as a value equal to ((a first system frame number) modulo (8)); and the first sub-frame field occupies 4 bits.

As one subsidiary embodiment of this sub-embodiment, the first system frame field is set as 0000000101, and the first sub-frame field is set as 0110; the first system frame field is set as the first system frame number; and the first sub-frame field occupies 4 bits.

As one embodiment, this example does not limit the system frame number and sub-frame number corresponding to the start moment of the first delay budget in the present application.

As one embodiment, this example does not limit the system frame number and sub-frame number corresponding to the cut-off moment of the first delay budget in the present application.

As one embodiment, this example does not limit a length of each window in the present application.

As one embodiment, this example does not limit a length of each system frame in the present application.

As one embodiment, this example does not limit a length of each sub-frame in the present application.

As one embodiment, this example does not limit the number of system frames in each system frame number period in the present application.

As one embodiment, this example does not limit the number of subframes in each system frame in the present application.

Those skilled in the art can understand that all or parts of the steps in the above-mentioned method can be completed by instructing the relevant hardware by a program, and the program can be stored in a computer-readable storage medium, such as a read-only memory, a hard disk or an optical disk. Optionally, all or parts of the steps in the above-mentioned embodiments can also be implemented by using one or more integrated circuits. Correspondingly, each module unit in the above-mentioned embodiments can be implemented in the form of hardware or in the form of a software function module. The present application is not limited to any specific form of combinations of software and hardware. The user equipment, the terminal and the UE in the present application include but are not limited to a drone, a communication module on the drone, a remote-controlled airplane, an aircraft, a small airplane, a mobile phone, a tablet computer, a notebook, a vehicle-mounted communication device, a wireless sensor, an Internet card, an Internet of Things terminal, an RFID terminal, an NB-IOT terminal, an MTC (Machine Type Communication) terminal, an eMTC (enhanced MTC) terminal, a data card, an Internet card, a vehicle-mounted communication device, a low-cost mobile phone, a low-cost tablet computer and other wireless communication devices. The base stations or the system devices in the present application include but are not limited to a macrocell base station, a microcell base station, a Femtocell, a relay base station, a gNB (NR node B) NR node B, a TRP (Transmitter Receiver Point) and other wireless communication devices.

The above is only a preferred embodiment of the present application and is not intended to limit the scope of protection of the present application. Any modifications, equivalent replacements, improvements, etc. made within the spirit and principles of the present application shall be included in the protection scope of the present application.

## Claims

1. A first node used for wireless communication, comprising:
a first transmitter for sending first signaling, the first signaling being used for determining a first delay budget and the first delay budget depending on at least a first system frame; or
a first transmitter for sending first signaling, the first signaling indicating a first moment and the first moment being a cut-off moment of a first delay budget,
wherein the first delay budget is a delay budget of a first data packet set; the first data packet set comprises at least one data packet, and each data packet in the first data packet set is a data packet on a MAC sub-layer; and a first system frame number is used for indicating the first system frame, and the first system frame number is an integer.

2. The first node according to claim 1, comprising:
a first receiver for receiving a first message, the first message indicating a delay budget of a data packet of a first radio bearer,
wherein the first data packet set belongs to the first radio bearer; and receiving time of the first data packet set and the delay budget of the data packet of the first radio bearer are jointly used for determining the first moment.

3. The first node according to claim 1 or 2, wherein the first signaling indicates the first moment, and the first moment depends on at least the first system frame.

4. The first node according to any one of claims 1 to 3, wherein the first signaling comprises a first index, the first index corresponds to a first time interval, and the first time interval comprises the first moment; and the first signaling indicates the first moment.

5. The first node according to claim 1 or 2, wherein the first signaling indicates a first time length, and a second moment and the first time length are used for determining the first delay budget; and at least one of the second moment or the first time length depends on the first system frame.

6. The first node according to claim 5, wherein the first signaling indicates the second moment.

7. The first node according to claim 5 or 6, wherein the first signaling comprises a first index, the first index corresponds to a first time interval, and the first time interval comprises the first time length; and the first delay budget depends on at least the first system frame.

8. The first node according to claim 4 or 7, wherein a first table is used for determining the first index; the first table comprises Q1 indexes and at most Q1 time intervals, the Q1 is a positive integer, and the Q1 is greater than 1; each time interval of the at most Q1 time intervals corresponds to one index of the Q1 indexes, and indexes corresponding to any two time intervals of the at most Q1 time intervals are different; and the first index is one index of the Q1 indexes, and the first time interval is one time interval of the Q1 time intervals.

9. A second node used for wireless communication, comprising:
a second receiver for receiving first signaling, the first signaling being used for determining a first delay budget and the first delay budget depending on at least a first system frame; or
a second receiver for receiving first signaling, the first signaling indicating a first moment and the first moment being a cut-off moment of a first delay budget,
wherein the first delay budget is a delay budget of a first data packet set; the first data packet set comprises at least one data packet, and each data packet in the first data packet set is a data packet on a MAC sub-layer; and a first system frame number is used for indicating the first system frame, and the first system frame number is an integer.

10. A method used in a first node for wireless communication, comprising:
sending first signaling, the first signaling being used for determining a first delay budget and the first delay budget depending on at least a first system frame; or
sending first signaling, the first signaling indicating a first moment and the first moment being a cut-off moment of a first delay budget,
wherein the first delay budget is a delay budget of a first data packet set; the first data packet set comprises at least one data packet, and each data packet in the first data packet set is a data packet on a MAC sub-layer; and a first system frame number is used for indicating the first system frame, and the first system frame number is an integer.

11. A method used in a second node for wireless communication, comprising:
receiving first signaling, the first signaling being used for determining a first delay budget and the first delay budget depending on at least a first system frame; or
receiving first signaling, the first signaling indicating a first moment and the first moment being a cut-off moment of a first delay budget,
wherein the first delay budget is a delay budget of a first data packet set; the first data packet set comprises at least one data packet, and each data packet in the first data packet set is a data packet on a MAC sub-layer; and a first system frame number is used for indicating the first system frame, and the first system frame number is an integer.
